(19) **Europäisches Patentamt / European Patent Office / Office européen des brevets**

(11) **EP 4 564 062 A1**

(12) **DEMANDE DE BREVET EUROPEEN**

(43) Date de publication:
04.06.2025   Bulletin 2025/23

(21) Numéro de dépôt: 24215938.2

(22) Date de dépôt: 27.11.2024

(51) Classification Internationale des Brevets (IPC):
*G01T 1/164* (2006.01)        *G01T 1/169* (2006.01)
*G01T 1/167* (2006.01)

(52) Classification Coopérative des Brevets (CPC):
**G01T 1/1647; G01T 1/167**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:   28.11.2023   FR 2313144

(71) Demandeurs:
• **Commissariat à l'Energie Atomique et aux Energies Alternatives**
  **75015 Paris (FR)**
• **Centre National de la Recherche Scientifique**
  **75794 Paris Cedex 16 (FR)**

• **Université de Bourgogne**
  **21078 Dijon Cedex (FR)**

(72) Inventeurs:
• **FRIGERIO, Adrien**
  **21120 Is sur Tille (FR)**
• **THIS, Kélian**
  **21120 Is sur Tille (FR)**
• **COLAS, Sébastien**
  **21120 Is sur Tille (FR)**
• **CARDOT, Hervé**
  **21078 Dijon Cedex (FR)**
• **DUPUIS, Xavier**
  **21078 Dijon Cedex (FR)**

(74) Mandataire: **INNOV-GROUP**
  **209 Avenue Berthelot**
  **69007 Lyon (FR)**

(54) **PROCÉDÉ DE LOCALISATION DE ZONES IRRADIANTES**

(57)    Procédé de localisation de points irradiants, avec un dispositif de mesure, comportant, :
- un détecteur (10),
- un circuit de mesure (12), configuré pour déterminer un nombre d'impulsions détectées par le détecteur;
le procédé comportant :
- acquisition de mesures ($S_m$) face à l'objet, à chaque mesure correspondant une position de mesure ($p_m$) et une orientation du détecteur ($\varphi_m$) ;
- formation d'un vecteur d'observation (y) à partir des taux de comptage extraits à partir des mesures
- sélection d'un nombre de points irradiants (N) dans l'objet ;
- initialisation d'un vecteur de paramètres ($\theta_k$), comportant une position ($\pi_n$) d'au moins un point irradiant;
- actualisation d'un modèle matriciel direct, reliant une estimation du vecteur d'observation ($\hat{y}$) à un vecteur d'intensités ($\phi_k$);
- inversion du modèle direct et mise à jour le vecteur de paramètres ($\theta_k$) et le vecteur d'intensités ($\phi_k$);
- réitération des deux dernières étapes.

**Fig. 1B**

**Description**

## DOMAINE TECHNIQUE

Le domaine technique de l'invention est la spectrométrie appliquée à la détection de rayonnements ionisants et à la localisation de zones irradiantes, émettrices de rayonnement ionisants. Il s'agit essentiellement de spectrométrie X ou y.

## ART ANTERIEUR

Dans les équipements des installations nucléaires, l'activité radiologique n'est pas répartie de façon homogène. Elle est généralement concentrée dans des zones, usuellement désignées par le terme « points chauds ». Généralement, l'intensité et la localisation des points chauds ne sont pas connues, car elles dépendent de l'historique d'exploitation de l'installation nucléaire. Or, lorsqu'on effectue un inventaire radiologique d'une installation nucléaire, il est utile de connaître, le mieux possible, la localisation des points chauds ainsi que leurs activités respectives.

Depuis les années 1990, des gamma caméras ont été développées, inspirées d'imageurs utilisés dans le domaine médical. Il s'agit de dispositifs permettant de former une image permettant d'établir une cartographie dans les installations nucléaires. L'objectif est de localiser et d'identifier, à distance, les principales sources irradiantes présentes dans une installation. Les développements et les usages des gamma caméras ont abondamment été décrits dans la littérature. Depuis le début des années 2000, on assiste au développement de gamma caméras spectrométriques. Ces caméras sont basées sur un imageur pixelisé, chaque pixel permettant d'obtenir un spectre de l'irradiation qu'il détecte. Il s'agit d'un gain considérable dans la localisation des sources irradiantes. En effet, la fonction spectrométrique permet de sélectionner des bandes d'énergies d'intérêt, correspondant à des photons non diffusés, c'est-à-dire des photons n'ayant pas été déviés depuis leur émission par la source d'irradiation.

Il s'agit de dispositifs performants mais assez coûteux. Leur sensibilité peut être insuffisante lorsque l'activité est due à des isotopes faiblement émetteurs y, par exemple des isotopes de Pu. Ainsi, les gamma caméras peuvent présenter une sensibilité insuffisante pour effectuer des contrôles visant à effectuer une comptabilité de matières nucléaires précise, ou d'évaluer le risque de criticité. Un exemple typique est la quantification d'accumulation de matière nucléaire dans une boite à gants, par exemple dans les installations de fabrication de combustible nucléaire.

A l'heure actuelle, les gamma caméras permettent une estimation de la dose générée par chaque point chaud détecté. Cependant, si l'on souhaite estimer l'activité des points chauds détectés, il est nécessaire de recourir à des moyens de modélisation. Cela nécessite certaines hypothèses de modélisation, ainsi qu'une certaine expertise. On comprend que l'estimation de l'activité des points chauds fait une large part à l'expérience de l'utilisateur.

L'invention décrite ci-après permet de localiser et de quantifier l'activité de points chauds, en utilisant un dispositif de mesure simple. Elle est particulièrement adaptée à des installations dont l'irradiation est faible, et provient d'émetteurs gamma présentant une faible intensité d'émission. Elle est également adaptée à des environnements dans lesquels les conditions d'accès sont contraintes, en particulier les environnements encombrés. Au-delà du nucléaire, l'invention peut également s'appliquer à une recherche de points chauds pour d'autres types d'application, par exemple le médical.

## EXPOSE DE L'INVENTION

Un premier objet de l'invention est un procédé de localisation de points irradiants dans un objet, chaque point irradiant émettant des photons gamma à au moins une énergie d'émission, le procédé mettant en oeuvre un dispositif de mesure, le dispositif de mesure comportant :

- un détecteur, configuré pour détecter les photons gamma, et pour former, à chaque détection, une impulsion;
- un circuit de mesure, configuré pour déterminer un nombre d'impulsions détectées;

le procédé comportant les étapes suivantes :

a) acquisition de mesures face à l'objet, à chaque mesure correspondant une position de mesure et une orientation du détecteur, les mesures étant acquises en disposant le détecteur en différentes positions de mesure et/ou différentes orientations;
b) traitement des mesures, par le circuit de mesure, de façon à extraire des taux de comptage;
c) formation d'un vecteur d'observation à partir des taux de comptage extraits lors de l'étape b);
d) sélection d'un nombre de points irradiants dans l'objet ;
e) initialisation d'un vecteur de paramètres, comportant une position d'au moins un point irradiant situé dans l'objet ;
f) à partir du vecteur de paramètres initialisé résultant de e), ou du vecteur de paramètre résultant d'une itération précédente, actualisation d'un modèle matriciel direct, reliant une estimation du vecteur d'observation à un vecteur d'intensités, le vecteur d'intensités comportant une estimation de l'intensité de chaque point irradiant ;

g) inversion du modèle direct, par un algorithme d'optimisation, de façon à mettre à jour le vecteur de paramètres et le vecteur d'intensités;

h) réitération des étapes f) et g) jusqu'à l'atteinte d'un critère d'arrêt d'itération, de façon à obtenir, suite à la dernière itération, une estimation du vecteur de paramètres et du vecteur d'intensités correspondant au nombre de points irradiants sélectionnés.

Selon un mode de réalisation, dit spectrométrique :

- le circuit de mesure est un circuit de mesure spectrométrique, configuré pour former un spectre, le spectre correspondant à un nombre de photons détectés dans différents canaux, à chaque canal correspondant une énergie du photon détecté ;
- le circuit de mesure comporte une unité spectrométrie, configurée pour identifier au moins un pic d'émission sur le spectre formé par le circuit de mesure spectrométrique, chaque pic d'émission s'étendant autour d'une énergie d'émission;

le procédé peut être tel que :

- dans l'étape a), chaque mesure est un spectre;
- l'étape b) comporte un traitement de spectres, par l'unité de spectrométrie, de façon à extraire des taux de comptage de chaque pic d'émission.

Selon une possibilité, lors de l'étape g), l'inversion comporte une minimisation d'une fonction de coût, la fonction de coût quantifiant un écart entre

- l'estimation du vecteur d'observation obtenue lors de l'étape f) ;
- le vecteur d'observation formé dans l'étape c).

L'étape g) peut être effectuée par un algorithme de maximum de vraisemblance.

Selon une possibilité :

- les étapes d) à h) sont réitérées en prenant en compte, lors de chaque itération des étapes d) à h), des nombres différents de points irradiants ;
- le procédé comporte une détermination d'un indicateur de validité associé à chaque itération des étapes d) à h), l'indicateur de validité étant associé au nombre de points irradiants sélectionné lors de chaque itération ;
- le procédé comporte une estimation du nombre de points irradiants le plus probable en fonction des différents indicateurs de validité respectivement associés à différents nombre de points irradiants.

L'indicateur de validité peut être un critère d'information d'Akaike.

Selon une possibilité, le modèle direct comporte une matrice de réponse, formée d'un produit de Hadamard entre au moins :

- une matrice de distances, traduisant les distances respectives entre chaque position de mesure et la position de chaque point irradiant, dont chaque terme comporte le carré de la distance entre une position de mesure et une position d'un point irradiant, la position de chaque point irradiant formant un paramètre du modèle direct ;
- une matrice d'efficacité, traduisant l'efficacité du détecteur, dont chaque terme correspond à une efficacité de détection du détecteur pour une position et une orientation du détecteur et pour une position d'un point irradiant à au moins une énergie d'émission.

Le modèle direct peut comporter une matrice de réponse, formée d'un produit de Hadamard entre au moins :

- une matrice de distances, traduisant les distances respectives entre chaque position de mesure et la position de chaque point irradiant, dont chaque terme comporte le carré de la distance entre une position de mesure et une position d'un point irradiant, la position de chaque point irradiant formant un paramètre du modèle direct ;
- une matrice d'efficacité, traduisant l'efficacité du détecteur, dont chaque terme correspond à une efficacité de détection du détecteur pour une position et une orientation du détecteur et pour une position d'un point irradiant.

La matrice de réponse peut être est formée d'un produit de Hadamard entre la matrice de distances, la matrice d'efficacité et une matrice d'atténuation, la matrice d'atténuation traduisant une atténuation des photons émis par chaque point irradiant dans l'objet, chaque terme de la matrice d'atténuation comportant un facteur d'atténuation, à une énergie d'émission, entre une position d'un point irradiant et une position du détecteur, chaque facteur d'atténuation formant un paramètre du modèle direct.

L'étape e) peut comporter

- e1) à partir du vecteur d'observation résultant de c), calcul d'un vecteur d'observation en l'absence d'atténuation dans l'objet ;
- e2) estimation du vecteur d'observation en l'absence d'atténuation dans l'objet en utilisant un modèle direct comportant la matrice de distances et la matrice d'efficacité ;
- e3) inversion du modèle direct, de façon à estimer un vecteur de paramètres initialisé et un vecteur d'intensité initial, compte tenu du nombre de points irradiants pris en compte dans l'étape d).

Selon une possibilité :

- pour un même nombre de points irradiants sélectionnés dans l'objet, les étapes e) à h) sont réitérées ;
- le procédé comporte une comparaison des fonctions de coûts résultant de chaque étape g) de chaque itération des étapes e) à h), le vecteur de paramètres et le vecteur d'intensités, pour le nombre de points irradiants sélectionnés, étant ceux correspondant à la fonction de coût minimale.

Selon une possibilité, l'étape g) comporte :

- g1) application d'un algorithme de descente de gradient, pour estimer le vecteur de paramètres, en se basant sur le vecteur d'intensité initial ou résultant d'une itération précédente,
- g2) application d'un algorithme d'inversion, pour estimer le vecteur d'intensité, en utilisant le vecteur de paramètres résultant de g1).

Selon une possibilité, pour un même nombre de points irradiants sélectionnés, le procédé comporte :

- une première série d'itérations des étapes e) à h), en utilisant un modèle direct dans lequel la matrice de réponse est constituée par un produit de Hadamard de la matrice de distances et de la matrice de sensibilité du détecteur ;
- une deuxième série d'itérations des étapes e) à h), en utilisant un modèle direct dans lequel la matrice de réponse est formée par un produit de Hadamard de la matrice de distances, de la matrice de sensibilité du détecteur et de la matrice d'atténuation ;
- la position et l'activité des points irradiants résultant de la première série d'itérations est utilisée pour initialiser l'inversion du modèle direct dans la première itération de la deuxième série d'itérations.

Selon un mode de réalisation, l'étape b) comporte une sélection d'au moins une énergie d'émission d'un isotope prédéterminé. Les taux de comptage sont ainsi extraits dans chaque énergie d'émission sélectionnée. Les étapes b) à h) peuvent être mises en oeuvre en sélectionnant successivement, dans chaque étape b), au moins une énergie d'émission de différents isotopes.

Suite à l'étape h), le procédé peut comporter une estimation d'un débit de dose en au moins un point de mesure, à partir du vecteur d'intensités et du vecteur de paramètres résultant de ladite étape h).

Selon une possibilité, le procédé comporte :

- mise à jour de la matrice de distances et de la matrice d'efficacité, en fonction du vecteur de paramètres résultant de l'étape h) ;
- prise en compte de coefficients d'absorption massique à au moins une énergie d'émission ;
- estimation du débit de dose en chaque point de mesure à partir de la matrice de distances, de la matrice d'efficacité et des coefficients d'absorption.

Dans le mode de réalisation spectrométrique, le débit de dose peut être estimé, en chaque point de mesure, pour différentes énergies d'émission correspondant respectivement à différents pics sur le spectre formé à chaque mesure.

Un deuxième objet de l'invention est un dispositif configuré pour estimer une position de points irradiants dans un objet, le dispositif comportant :

- un détecteur, configuré pour détecter les photons gamma, et pour former, à chaque détection, une impulsion, le détecteur étant mobile autour de l'objet, de façon à pouvoir être disposé en plusieurs positions et/ou selon différentes orientations par rapport à l'objet ;
- un circuit de mesure, configuré pour configuré pour déterminer un nombre d'impulsions détectées par le détecteur;
- une unité de traitement, programmée pour mettre en oeuvre les étapes c) à h) d'un procédé selon le premier objet de l'invention à partir du nombre d'impulsions détectées par le circuit de mesure.

Selon une possibilité :

- le circuit de mesure est un circuit de mesure spectrométrique, configuré pour former un spectre, le spectre correspondant à un nombre de photons détectés dans différents canaux, à chaque canal correspondant une énergie du photon détecté ;
- le circuit de mesure comporte une unité spectrométrie, configurée pour identifier des pics d'émission sur le spectre formé par le circuit de mesure spectrométrique.

Un troisième objet de l'invention est un support, pouvant être connecté à un ordinateur, comportant des instructions pour mettre en oeuvre l'étape c) et e) à h), éventuellement d), d'un procédé selon le premier objet de l'invention à partir de taux de comptage résultant de mesures réalisées à l'aide d'un détecteur de photons gamma autour d'un objet.

Le support peut être intégré à un ordinateur ou relié à un ordinateur par une liaison filaire ou sans fil.

L'invention sera mieux comprise à la lecture de l'exposé des exemples de réalisation présentés, dans la suite de la description, en lien avec les figures listées ci-dessous.

## FIGURES

La figure 1A représente un exemple de dispositif permettant une mise en oeuvre de l'invention, selon un premier mode de réalisation.

La figure 1B montre différentes positions ou orientations du dispositif, selon le premier mode de réalisation autour d'un objet étudié.

La figure 2A représente un exemple de spectre.

La figure 2B représente le spectre représenté sur la figure 2A après étalonnage en énergie.

La figure 2C est un détail de la figure 2A.

La figure 2D est un détail de la figure 2B.

La figure 3A montre les principales étapes d'un procédé mettant en oeuvre l'invention.

La figure 3B montre des étapes selon lesquelles on estime tout d'abord un vecteur de paramètres puis un vecteur d'intensité, lors de chaque itération.

La figure 3C illustre des étapes permettant une initialisation de chaque itération, lorsque plusieurs nombres de points irradiants sont successivement pris en compte.

La figure 3D illustre des étapes permettant une estimation d'un débit de dose à partir de points irradiants identifiés.

La figure 4 schématise une courbe d'efficacité d'un détecteur.

La figure 5 illustre les performances d'une estimation d'un terme d'un vecteur d'observation, correspondant à l'énergie 129.3 keV, sans prise en compte d'écrans dans l'objet.

La figure 6 illustre un deuxième mode de réalisation de l'invention.

Les figures 7A et 7B illustrent un exemple d'application sur une boîte à gants. Sur la figure 7A, on a représenté des taux de comptage du vecteur d'observation, dans une bande d'énergie, pour différentes positions du détecteur.

La figure 7B montre une estimation de la répartition et de la masse de matière de différents points irradiants dans la boite à gants.

## EXPOSE DE MODES DE REALISATION PARTICULIERS

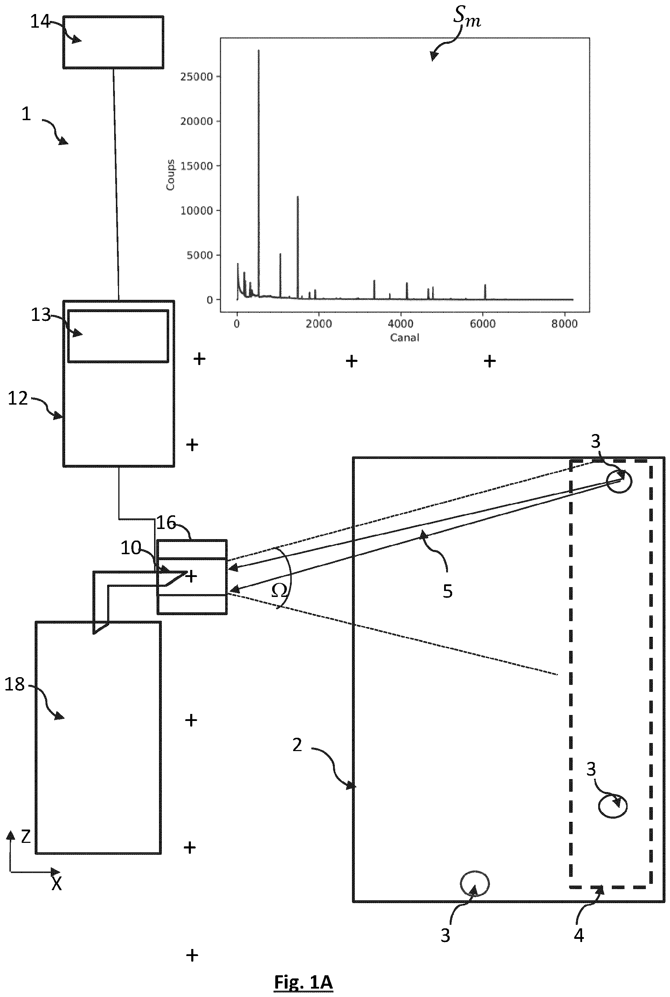

On a représenté, sur la figure 1A, un dispositif 1 permettant la mise en oeuvre de l'invention, selon un premier mode de réalisation, dit mode de réalisation spectrométrique. Le dispositif est un système de mesure, comportant un détecteur 10, apte à interagir avec un rayonnement ionisant 5 émis par un objet 2. L'objet 2 est ici une boite à gants, pouvant comporter différents points irradiants (ou points chauds) 3, répartis dans la boite à gants. L'activité de chaque point irradiant, ainsi que leur répartition, est inconnue. L'invention peut s'appliquer à tout type d'objet équipant une installation nucléaire, de type structure de génie civil, colis de déchets, composants divers. L'invention peut également s'appliquer en dehors du domaine nucléaire, par exemple dans le domaine médical, par exemple pour localiser et quantifier l'activité d'un isotope radioactif administré dans un corps d'un individu.

Dans l'exemple représenté sur la figure 1A, la boite à gants comporte une zone comportant différents équipements. Les points irradiants 3 sont disposés dans la zone 4 et au niveau du sol de la boite à gants. On désigne par $\pi_n$ la position de chaque point irradiant dans un repère XYZ associé à l'objet étudié. L'indice $n$ est un entier, $1 \leq n \leq N$ qui permet d'identifier chaque point irradiant. $N$ correspond au nombre de points irradiants. Généralement, $N$ est inconnu. Un objectif de l'invention est de déterminer la position $\pi_n$ et l'activité $\varnothing_n$ de chaque point irradiant.

On suppose que les radionucléides irradiants susceptibles d'être présents dans un objet mesuré soient préalablement connus. A défaut, ils peuvent être déterminés par l'unité de spectrométrie. On peut notamment constituer une liste comportant des radionucléides irradiants $2_j$ potentiellement présents dans l'objet analysé. L'indice $j$ désigne chaque radionucléide irradiant. La liste des radionucléides, et leurs proportions relatives, est supposée connue, et forme un spectre type.

A défaut, et c'est l'option qui est décrite dans l'exemple suivant, le procédé est mis en oeuvre radioisotope par radioisotope.

Dans l'exemple représenté, le détecteur comporte un matériau semi-conducteur, de type Germanium (Ge), mais il pourrait également s'agir d'un autre matériau, scintillateur ou semi-conducteur communément mis en oeuvre pour la détection de photons ionisants, par exemple de type Si, CdTe, CdZnTe, $LaBr_3$, ou Nal, voire des détecteurs gazeux, de type chambre d'ionisation.

Quel que soit le détecteur utilisé, il permet une collecte d'une quantité de charges $Q$ sous l'effet d'une énergie $E$ libérée par le rayonnement ionisant au cours d'une interaction dans le détecteur 10. Par rayonnement ionisant, on entend un rayonnement photonique de type X ou gamma, formé de photons dont l'énergie est par exemple comprise entre 1 keV et 2 MeV.

Le détecteur 10 est relié à un circuit de mesure 12, configuré pour générer une impulsion dont l'amplitude dépend, et est de préférence proportionnelle, à la quantité de charge collectée lors d'une interaction. La quantité de charge correspond à l'énergie déposée par le rayonnement au cours de l'interaction.

Le circuit de mesure 12 est comporte une unité de spectrométrie 13, qui permet de rassembler l'ensemble des impulsions formées durant une durée d'acquisition. Chaque impulsion correspond à une interaction du rayonnement incident dans le matériau de détection. L'unité de spectrométrie 13 classe alors les impulsions en fonction de leur amplitude $Amp$, pour fournir un histogramme comportant le nombre d'impulsions détectées en fonction de leur amplitude. Un tel histogramme est un spectre en amplitude. Il est usuellement obtenu en utilisant un analyseur multicanaux. Chaque amplitude est discrétisée selon des canaux, à chaque canal étant assignée une bande d'amplitude. La valeur de chaque canal du spectre correspond à un nombre d'impulsions dont l'amplitude est située dans la bande d'amplitude assignée au canal. Chaque bande d'amplitude correspond à une bande d'énergie, la correspondance étant bijective. Ainsi, à chaque canal est assignée une bande d'énergie ou une bande d'amplitude.

La relation entre amplitude et énergie peut être réalisée en irradiant le détecteur à l'aide d'une source d'étalonnage, émettant un rayonnement dont on connaît l'énergie. Il s'agit en particulier d'un rayonnement présentant au moins une discontinuité, ou pic d'énergie, à une valeur connue de l'énergie. Cette opération est usuellement désignée par le terme étalonnage en énergie. Par exemple, dans le cadre de la spectrométrie gamma, on expose le détecteur à une source de calibration de type $^{152}$Eu, produisant des photons à des énergies d'émission connues. On peut également mettre en oeuvre une source de type $^{137}$Cs, produisant majoritairement des photons dont l'énergie est de 661,6 keV. On peut également utiliser une source de $^{60}$Co produisant des photons dont l'énergie est majoritairement 1173 keV et 1332 keV. L'étalonnage en énergie peut être effectué comme décrit dans WO2023126509.

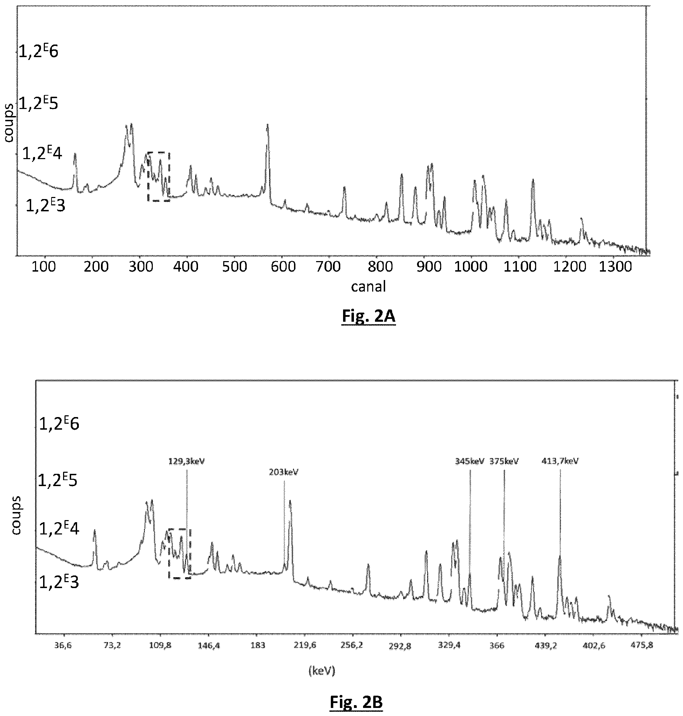

L'unité de spectrométrie est configurée pour former un spectre en énergie à partir des impulsions formées dans le circuit de traitement 12. L'unité de spectrométrie est également configurée pour effectuer des opérations de traitement du spectre, par exemple une détection de pics et une détermination d'une valeur spectrale au niveau de chaque pic. Ces opérations sont décrites plus en détail en lien avec les figures 2A à 2D.

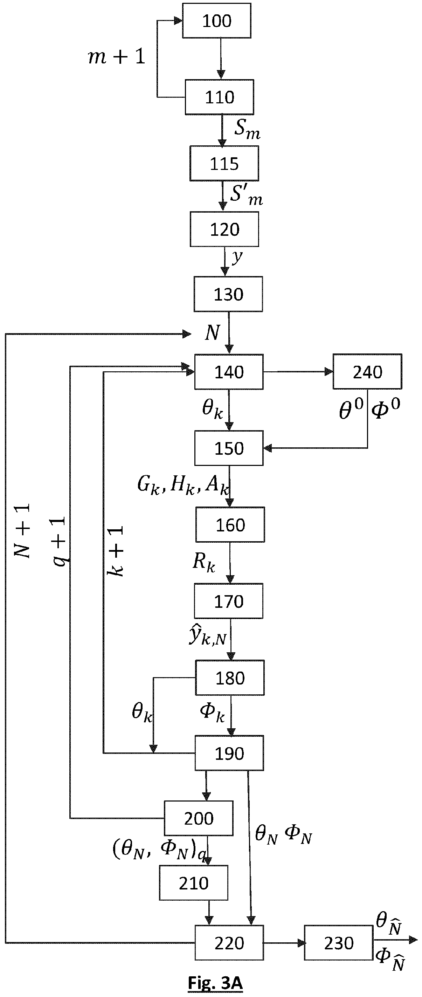

Le dispositif comporte une unité de traitement 14, programmée pour mettre en oeuvre des étapes d'algorithmes décrits par la suite, en lien avec les figures 3A à 3D, de façon à localiser chaque point irradiant et à en estimer les activités respectives.

Dans l'exemple représenté, le détecteur 10 est relié à un cryostat 18, comportant de l'azote liquide pour maintenir le détecteur Ge à une température de fonctionnement. Le détecteur 10 est entouré d'un blindage 16, de façon à limiter l'influence de rayonnements émis en dehors d'un champ d'observation $\Omega$ du détecteur 10. Sur la figure 1A, on a représenté les limites du champ d'observation $\Omega$ par deux lignes en pointillés.

Un aspect important de l'invention est que le détecteur 10 est déplacé selon différents points de mesure autour de l'objet 2 étudié. Sur la figure 1A, chaque point de mesure est matérialisé par une croix. Chaque point de mesure correspond à une position occupée par un point de référence du détecteur 10, par exemple le centre.

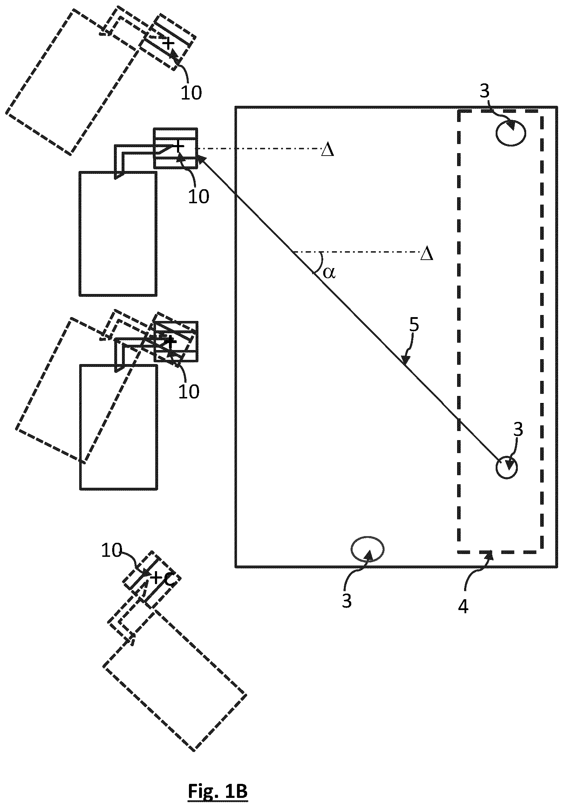

Sur la figure 1B, on a représenté le détecteur 10 disposé en plusieurs points de mesure autour de l'objet 2 étudié. A chaque point de mesure, le détecteur est orienté selon une ou plusieurs orientations. Par la suite, chaque mesure est identifiée par un entier $m$. Chaque mesure est effectuée en une position $p_m$ et une orientation $a_m$. Chaque position $p_m$ et chaque orientation $a_m$ comportent trois coordonnées, respectivement spatiales et angulaires, dans le repère XYZ associé à l'objet étudié 2.

La figure 2A représente un exemple de spectre. L'axe des abscisses correspond à l'amplitude, discrétisée en canaux d'amplitude, et l'axe des ordonnées représente un nombre d'impulsions comptabilisées à chaque amplitude durant l'acquisition du spectre. La figure 2B montre le même spectre après étalonnage en énergie. A chaque canal d'amplitude est assigné une valeur d'énergie.

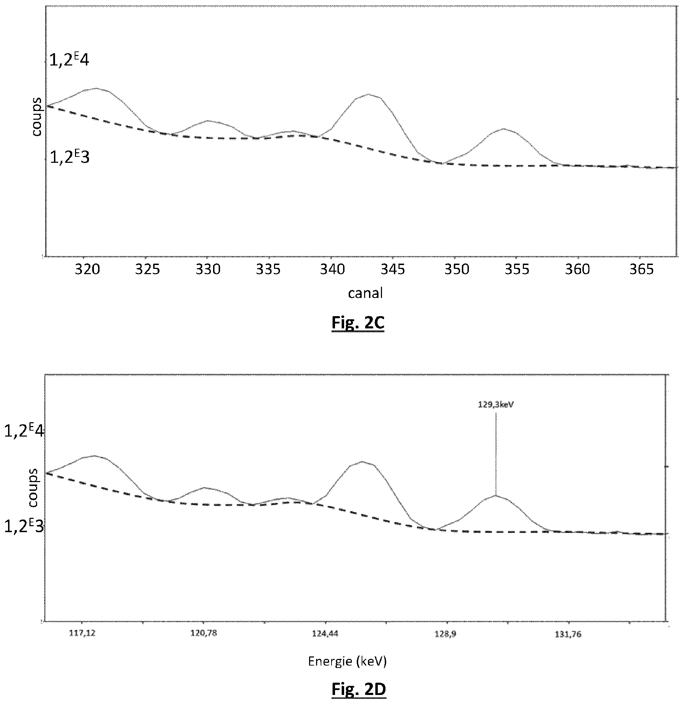

Certains logiciels commerciaux permettent d'effectuer une détection automatique de pics ainsi qu'une estimation de l'intensité des pics détectés. Par estimation de l'intensité, on entend l'estimation de la surface de chaque pic. Les figures 2C et 2D schématisent une extraction d'une surface d'un pic, dans une région d'intérêt matérialisée par un cadre sur les figures 2A et 2B. Sur les figures 2C et 2D, la surface d'un pic est extraite « en dessus » du bruit de fond, ce dernier étant matérialisé par une ligne en pointillés. La surface extraite correspond à une intensité du pic à l'énergie d'émission du pic, cette dernière correspondant à l'abscisse dudit pic. Le document WO2023126508 décrit un procédé permettant d'extraire automatiquement une surface d'un pic, en alternative aux logiciels commerciaux actuellement proposés.

Comparativement aux gammas caméras, un avantage du recours à un dispositif de spectrométrie, non pixelisé, est que le volume de détection peut être élevé. Par exemple de l'ordre de 1 pouce de diamètre et 1 pouce de hauteur, voire davantage pour un détecteur de type LaBr3. Le recours à des détecteurs de type Germanium permet de recourir à des volumes plus élevés. Cela confère une bonne sensibilité de mesure. On peut ainsi adresser des niveaux d'irradiation faibles, ce qui est particulièrement approprié à des émetteurs faiblement irradiants, tels que certains isotopes de Pu. Cela permet également d'adresser de faibles niveaux d'activité pour des isotopes fortement émetteurs gamma, par exemple $^{137}$Cs ou $^{60}$Co.

Le volume élevé de détection peut être combiné avec le recours à des temps d'acquisition longs, par exemple plusieurs dizaines de secondes, voire plusieurs minutes ou dizaines de minutes. Cela permet d'obtenir une très bonne sensibilité de détection, d'autant plus que la spectrométrie permet une sélection de pics à certaines énergies, préalablement déterminées.

Les principales étapes d'un procédé de détection sont décrites en lien avec la figure 3A.

Etape 100 : disposition du détecteur en une position $p_m$ et une orientation de mesure $a_m$ autour de l'objet. Ainsi, chaque mesure m est associée à une position $p_m$ et une orientation de mesure Gm.

Etape 110 : acquisition d'un spectre $S_m$

Les étapes 100 et 110 sont renouvelées de façon à disposer de M spectres mesurés. Chaque spectre mesuré $S_m$ est associé à une position ou à une orientation de mesure.

Etape 115 : extraction de l'aire des pics.

Au cours de cette étape, le spectre est analysé par l'unité de spectrométrie, de façon à extraire une surface de chaque pic. On détermine un taux de comptage, en chaque pic, qui correspond à un nombre d'impulsions détectées, dans le pic, divisé par unité de temps. Cela permet de former, pour chaque mesure m, un vecteur $S'_m$, de dimension L, dont chaque terme $S'_m(\lambda_l)$ est une aire d'un pic détecté par l'unité de spectrométrie à une énergie d'émission $\lambda_l$.

A chaque énergie correspond un radioisotope, émettant un photon à ladite énergie selon un taux d'embranchement $i_l$, où $l$ est un index désignant l'énergie. $i_l$ est un nombre de photons émis pour une activité de 100 Bq du radioisotope.

Etape 120 : sélection d'un ou plusieurs isotopes et formation du vecteur d'observation.

Au cours de cette étape, on sélectionne un ou plusieurs isotopes dont les énergies d'émission correspondent aux énergies détectées par le détecteur. On peut sélectionner un seul isotope ou sélectionner l'ensemble des isotopes en assignant, à chacun d'entre eux, une fraction $w_j$. Cette dernière peut être estimée, au premier ordre, par l'unité de spectrométrie, ou résulter d'un a priori, par exemple sur la base d'un prélèvement ou de la connaissance de l'historique d'exploitation .

A partir du vecteur des surfaces extraites $S'_m$, on calcule pour chaque isotope y considéré, extrait un vecteur d'observation $y_m$ pour la mesure m tel que :

$$y_m = w_j \frac{S'_m}{i_l t_m} \times 100 \ (1)$$

$t_m$ correspond à une durée d'intégration du spectre $S_m$.

Lorsque le procédé est mis en oeuvre pour un seul isotope, le vecteur $y_m$ n'est défini que pour tout ou partie des énergies d'émission de l'isotope, détectées par la spectrométrie, et $w_j = 1$. Dans ce cas, L correspond à un nombre d'énergies d'émission prises en compte pour l'isotope considéré. Avantageusement, le procédé est mis successivement pour un seul isotope, en considérant successivement chaque isotope identifié au vu des spectres détectés.

Les M vecteurs d'observations $y_m$ pour chaque mesure sont concaténés pour former un vecteur d'observation y, de dimension ML

Le vecteur d'observation y est tel que :

$$y = \begin{bmatrix} y_1(\lambda_1) \\ \vdots \\ y_1(\lambda_L) \\ \vdots \\ y_M(\lambda_1) \\ \vdots \\ y_M(\lambda_L) \end{bmatrix} (2)$$

Chaque terme $y_m(\lambda_l)$ est un taux de comptage d'un pic détecté au cours d'une mesure m à l'énergie $\lambda_l$, normalisé par le taux d'embranchement $i_l$ de l'isotope à l'énergie *l*. Ainsi, chaque terme $y_m(\lambda_l)$ est homogène à des impulsions détectées par seconde pour 1 photon émis par seconde.

*L* est un entier indexant l'énergie, avec $1 \leq l \leq L$.

Etape 130 : sélection d'un nombre de points irradiants *N*.

Au cours de cette étape, on définit arbitrairement un nombre *N* de points irradiants à localiser dans l'objet. *N* est un entier strictement positif. De façon avantageuse, *N* peut être progressivement augmenté, comme décrit par la suite.

Les étapes décrites par la suite sont des étapes itératives. *k* est un entier qui désigne le rang de chaque itération. $1 \leq k \leq K$

Etape 140 : Définition d'un vecteur de paramètres $\theta_k$.

Le vecteur de paramètres $\theta_k$ comporte certaines inconnues, en particulier la position $\pi_n$ de chaque point irradiant, et, de façon optionnelle, des paramètres d'atténuation $\tau_{n,\lambda}$. Le paramètre d'atténuation quantifie l'atténuation du rayonnement, à l'énergie $\lambda$, émis par le point irradiant *n*. L'indice *n* désigne chaque point irradiant, à la position $\pi_n$, avec $1 \leq n \leq N$.

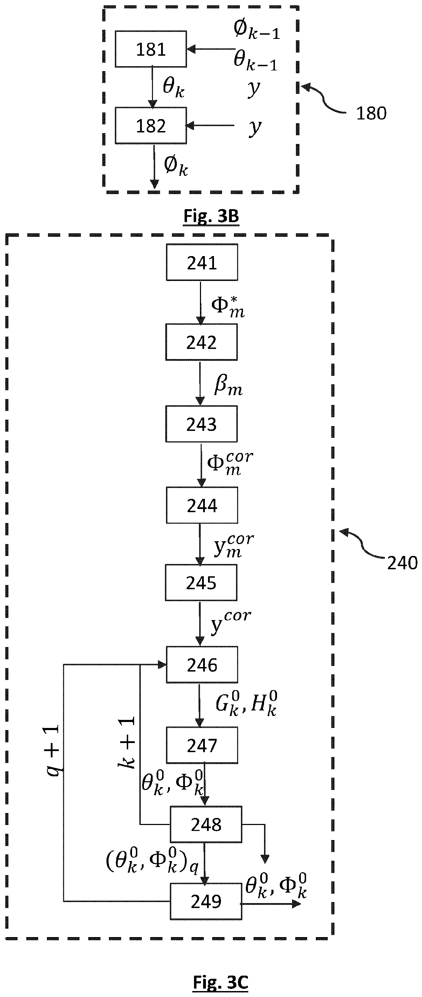

Au cours de la première itération, (k = 1), le vecteur de paramètres $\theta_k$ est initialisé de façon arbitraire, ou sur la base d'un a priori. Cela fait l'objet de l'étape 240. Le vecteur de paramètres $\theta_k$ peut être initialisé comme décrit en lien avec les étapes 241 et 249 décrites par la suite, en lien avec la figure 3C.

Etape 150 : formation de matrices permettant d'établir un modèle direct.

Au cours de cette étape, on forme plusieurs matrices permettant une formation du modèle direct.

Une matrice de distances $G_k$ traduit les distances respectives entre la position de mesure $p_m$ de chaque mesure m et la position de chaque point irradiant $\pi_{1,k}$, dont chaque terme correspond à l'inverse du carré de la distance entre une position de mesure et une position d'un point irradiant, la position de chaque point irradiant formant un paramètre du modèle direct.

Dans la première itération (*k*=1), la position de chaque point irradiant $\pi_{n,k}$ correspond à une position initiale, résultant d'une phase d'initialisation, décrite par la suite. Lorsque (*k*>1), la position de chaque point irradiant correspond à la position mise à jour lors de l'itération précédente.

$$G_k = \begin{bmatrix} \frac{1}{\|p_1 - \pi_{1,k}\|^2} & & \frac{1}{\|p_1 - \pi_{N,k}\|^2} \\ \vdots & \cdots & \vdots \\ \frac{1}{\|p_M - \pi_{1,k}\|^2} & & \frac{1}{\|p_M - \pi_{N,k}\|^2} \\ \vdots & \ddots & \vdots \\ \frac{1}{\|p_1 - \pi_{1,k}\|^2} & & \frac{1}{\|p_1 - \pi_{N,k}\|^2} \\ \vdots & \cdots & \vdots \\ \frac{1}{\|p_M - \pi_{1,k}\|^2} & & \frac{1}{\|p_M - \pi_{N,k}\|^2} \end{bmatrix} (3)$$

La matrice $G_k$ est formée par une concaténation de L blocs $\begin{bmatrix} \frac{1}{\|p_1 - \pi_{1,k}\|^2} & & \frac{1}{\|p_1 - \pi_{N,k}\|^2} \\ \vdots & \cdots & \vdots \\ \frac{1}{\|p_M - \pi_{1,k}\|^2} & & \frac{1}{\|p_M - \pi_{N,k}\|^2} \end{bmatrix}$

Dans la matrice $G_k$, chaque terme $\frac{1}{\|p_m - \pi_{n,k}\|^2}$ représente l'inverse du carré de la distance entre la position $\pi_n$ lors de l'itération *k,* et la position $p_m$, du détecteur lors de la mesure de rang m. Cela correspond à une prise en compte de l'atténuation des photons 5 émis par le point irradiant, positionné en $\pi_{1,n}$, les photons étant détectés par le détecteur, sous l'effet de la distance. Le point irradiant est considéré comme ponctuel vis-à-vis du détecteur.

Une matrice d'efficacité $H_k$ traduit l'efficacité du détecteur aux différentes énergies d'émission résultant de l'étape b), dont chaque terme correspond à une efficacité de détection du détecteur pour une position et une orientation du détecteur et pour une position d'un point irradiant. La matrice d'efficacité $H_k$ peut par exemple être établie selon l'hypothèse que la fonction de réponse du détecteur, à une énergie d'émission $\lambda_l$, ne dépend que de l'angle d'incidence $\alpha$ des photons générés par chaque point irradiant présent dans le champ d'observation. Comme représenté sur la figure 1B, l'angle d'incidence $\alpha$ est établi par rapport à un axe $\Delta$ normal au détecteur 10, et formant un axe de symétrie du détecteur. Cela suppose que la réponse du détecteur soit axisymétrique, et que chaque point irradiant soit considéré comme suffisamment éloigné pour que les photons 5 détectés soient considérés comme ayant le même angle d'incidence.

On pose

$$H_k = \begin{bmatrix} h(\lambda_1, \varphi_{k_{1,1}}) & & h(\lambda_1, \varphi_{k_{1,N}}) \\ \vdots & \cdots & \vdots \\ h(\lambda_1, \varphi_{k_{M,1}}) & & h(\lambda_1, \varphi_{k_{M,N}}) \\ \vdots & \ddots & \vdots \\ h(\lambda_L, \varphi_{k_{1,1}}) & & h(\lambda_L, \varphi_{k_{1,N}}) \\ \vdots & \cdots & \vdots \\ h(\lambda_L, \varphi_{k_{M,1}}) & & h(\lambda_L, \varphi_{k_{M,N}}) \end{bmatrix} (4)$$

Dans la matrice $H_k$, chaque terme $\varphi_{k_{m,n}}$ correspond à un cosinus de l'angle d'incidence entre un point irradiant considéré, lors de l'itération $k$, à la position $\pi_n$ et le détecteur lors de la mesure m.

La grandeur $h(\lambda_l, \varphi_{k_{m,n}})$ correspond à l'efficacité de détection, à l'énergie $\lambda_l$, pour les rayonnements émis par un point irradiant localisé, lors de l'itération k, à la position $\pi_n$, dont les photons, détectés par le détecteur situé au point $p_m$, atteignent ce dernier selon un angle d'incidence dont le cosinus est $\varphi_{m,n}$. L'efficacité correspond à un ratio entre le nombre de photons détectés à l'énergie $\lambda_l$ sur le nombre de photons incidents à cette énergie

Le cas d'un détecteur dont l'efficacité est axisymétrique est une hypothèse simplificatrice. Lorsqu'une telle hypothèse n'est pas vérifiée, une efficacité peut être déterminée en prenant en compte deux variables angulaires au lieu d'une seule.

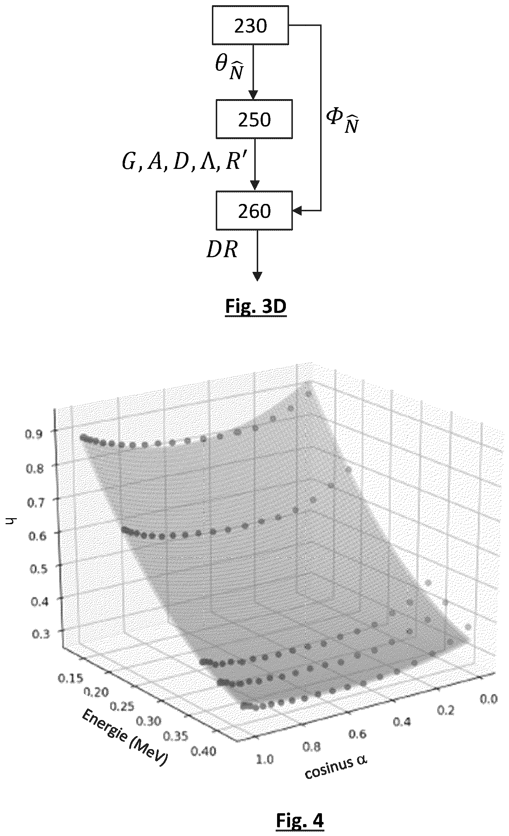

La figure 4 représente différentes valeurs d'une efficacité d'un détecteur h en fonction de l'énergie (MeV) et du cosinus de l'angle d'incidence $\alpha$. Le détecteur pris en compte est un détecteur Germanium cylindrique de surface 38 mm$^2$ et d'épaisseur 30 mm. Les points correspondent à des valeurs modélisées avec le code de transport de particules MCNP. La nappe correspond à un produit de deux polynômes de degré 2 : un premier polynôme dont la variable est l'énergie et un deuxième polynôme dont la variable est le cosinus de l'angle d'incidence. La figure 4 montre que, moyennant les hypothèses précédentes, pour un détecteur donné, l'efficacité de détection peut être considérée comme ne dépendant, en première approximation, que de $\varphi_{m,n}$ et de l'énergie $\lambda_l$.

De façon optionnelle, mais préférée, une matrice d'atténuation $A_k$ est construite. La matrice d'atténuation traduit une atténuation des photons émis par chaque point irradiant dans l'objet, chaque terme de la matrice d'atténuation comportant un facteur d'atténuation, à une énergie d'émission, entre une position d'un point irradiant et une position du détecteur, chaque facteur d'atténuation formant un paramètre du modèle direct.

$$A_k = \begin{bmatrix} e^{-\frac{\tau_{k_{1,1}}}{\lambda_1}} & & e^{-\frac{\tau_{k_{1,N}}}{\lambda_1}} \\ \vdots & \cdots & \vdots \\ e^{-\frac{\tau_{k_{M,1}}}{\lambda_1}} & & e^{-\frac{\tau_{k_{M,1}}}{\lambda_1}} \\ \vdots & \ddots & \vdots \\ e^{-\frac{\tau_{k_{1,1}}}{\lambda_L}} & & e^{-\frac{\tau_{k_{1,N}}}{\lambda_L}} \\ \vdots & \cdots & \vdots \\ e^{-\frac{\tau_{k_{M,1}}}{\lambda_L}} & & e^{-\frac{\tau_{k_{M,N}}}{\lambda_L}} \end{bmatrix} (5)$$

Chaque terme $e^{-\frac{\tau_{k_{m,n}}}{\lambda_l}}$ correspond à une atténuation des photons détectés par le détecteur, situé au point $p_m$, les photons étant émis par un point irradiant localisé, lors de l'itération $k$, à la position $\pi_n$. Les valeurs $\tau_{k_{m,n}}$ sont des termes d'atténuation du vecteur de paramètres $\theta_k$. Ainsi, le vecteur de paramètres $\theta_k$ comporte chaque position $\pi_{n,k}$ et chaque

terme d'atténuation $\tau_{k_{m,n}}$.

La méthode peut fonctionner sans nécessairement mettre en oeuvre la matrice d'atténuation $A_k$, par exemple pour des applications mettant en oeuvre des écrans peu denses, et/ou des émetteurs gamma de forte énergie. C'est par exemple le cas d'une activité surfacique, en l'absence de composants atténuants dans l'objet étudié. Dans ce cas, le vecteur de paramètres $\theta_k$ ne comporte que la position $\pi_{n,k}$ de chaque point irradiant à l'itération $k$.

Chacune des matrices $G_k$, $H_k$ et $A_k$ est paramétrée par le vecteur de paramètres $\theta_k$. Ainsi, chaque matrice est mise à jour lors de chaque itération. Chaque matrice constituée lors de cette étape a une même dimension : $ML \times N$.

Etape 160 : formation de la matrice de réponse

A partir de chaque matrice, ou uniquement des matrices $G_k$, $H_k$, on peut constituer une matrice de réponse $R_k$, telle que :

$$R_k = G_k \odot H_k \odot A_k \ (6)$$

où $\odot$ désigne le produit de Hadamard (produit terme à terme).

Etape 170 : formation du modèle direct

A partir de la matrice de réponse $R_k$, on peut établir un modèle direct tel que

$$\hat{y}_{N,k} = R_k \phi_k \ (7)$$

$\hat{y}_{N,k}$ correspond à une estimation du vecteur d'observation y, résultant du modèle direct, lors de l'itération $k$. L'indice $N$ désigne le fait que $\hat{y}_N$ est estimé en considérant un nombre $N$ de points irradiants répartis dans l'objet.

$\phi_k$ est un vecteur de dimension $N$ qui comporte l'activité de chaque point irradiant en prenant en compte les raies d'émission et les taux d'embranchement sélectionnés durant l'étape 120.

L'expression (6) revient à ce que :

$$\hat{y}_{N,k}(m; \lambda_l) = \sum_{n=1}^{N} \frac{\phi_{n,k}}{\left\| p_m - \pi_{n,k} \right\|^2} h(\lambda_l, \varphi_{k_{m,n}}) e^{-\frac{\tau_{k_{m,n}}}{\lambda_l}} \ (7')$$

$\hat{y}_{N,k}(m; \lambda_l)$ représente une estimation du terme du vecteur d'observation correspondant à la mesure $m$ et à l'énergie $\lambda_l$.

Etape 180 : inversion du modèle direct.

La résolution du problème inverse posé dans (6) permet d'estimer conjointement le vecteur de paramètre $\theta_k$ ainsi que le vecteur $\phi_k$. Pour cela, on établit une fonction de coût, traduisant un écart entre le vecteur d'observation y et son estimation $\hat{y}_{N,k}$ résultant du modèle direct.

La fonction de coût peut être établie selon un algorithme de type maximum de vraisemblance. On fait alors l'hypothèse que chaque mesure, correspondant au vecteur d'observation y est une réalisation d'une variable aléatoire Y. On suppose que les mesures $y_m(\lambda_l)$, avec $1 \le m \le M$ et $1 \le l \le L$ sont des réalisations de variables aléatoires indépendantes $Y_{m,\lambda_l}$ suivant une loi de Poisson de paramètre $\hat{y}_{N,k}(m; \lambda_l)$. On suppose que la loi de Poisson peut être approchée par une loi normale sous réserve d'un paramètre suffisamment grand, c'est-à-dire pour des pics formés à partir d'au moins 30 impulsions détectées. Cela correspond à des pics, qui, suite à l'extraction de l'étape 115, ont une surface correspondant à 30 impulsions. $S'_m(\lambda_l) \ge 30$.

On définit, pour chaque énergie $\lambda_l$ et chaque point de mesure m, une fonction de vraisemblance telle que

$$\mathcal{L}_{N,k}(\theta_k, \phi_k | y(m, \lambda_l)) = \frac{1}{\sqrt{2\pi \hat{y}_{N,k}(m, \lambda_l)}} e^{-\frac{1}{2}\left(\frac{y(m, \lambda_l) - \hat{y}_{N,k}(m, \lambda_l)}{\sqrt{\hat{y}_{N,k}(m, \lambda_l)}}\right)^2} \ (8)$$

En prenant en compte les L énergies d'émission, et les M points de mesure, l'expression précédente peut être étendue on peut définir une fonction de vraisemblance appliquée au vecteur y, telle que :

$$\mathcal{L}_{N,k}(\theta_k, \phi_k|y) = \prod_{l=1}^{L} \prod_{m=1}^{M} \frac{1}{\sqrt{\hat{y}_{N,k}(m,\lambda_l)}} e^{-\frac{1}{2}\left(\frac{y(m,\lambda_l)-\hat{y}_{N,k}(m,\lambda_l)}{\sqrt{\hat{y}_{N,k}(m,\lambda_l)}}\right)^2} \qquad (9)$$

La log vraisemblance de $\mathcal{L}_{N,k}(\theta_k, \phi_k|y)$ s'écrit

$$ln\left(\mathcal{L}_{N,k}(\theta_k, \phi_k|y)\right) = \sum_{l=1}^{L}\sum_{m=1}^{M}\left(\frac{1}{\sqrt{2\pi\hat{y}_{N,k}(m,\lambda_l)}}\right) - \frac{1}{2}\sum_{l=1}^{L}\sum_{m=1}^{M}\left(\frac{y(m,\lambda_l)-\hat{y}_{N,k}(m,\lambda_l)}{\sqrt{\hat{y}_{N,k}(m,\lambda_l)}}\right)^2 \quad (10)$$

Afin d'optimiser le temps de calcul, l'expression (10) est simplifiée en introduisant $y(m, \lambda_l)$ au lieu de $\hat{y}_{N,k}(m, y\lambda_l)$ dans les estimateurs de variance, de façon à obtenir :

$$ln\left(\mathcal{L}_{N,k}(\theta_k, \phi_k|y)\right) \approx \sum_{l=1}^{L}\sum_{m=1}^{M}\left(\frac{1}{\sqrt{2\pi y(m,\lambda_l)}}\right) - \frac{1}{2}\sum_{l=1}^{L}\sum_{m=1}^{M}\left(\frac{y(m,\lambda_l)-\hat{y}_{N,k}(m,\lambda_l)}{\sqrt{y(m,\lambda_l)}}\right)^2 \quad (11)$$

Le premier terme de (11) étant indépendant de $\theta_k$, la fonction de coût à minimiser est

$$j_{mv,N,k}(\theta_k, \phi_k) = -\frac{1}{2}\sum_{l=1}^{L}\sum_{m=1}^{M}\left(\frac{y(m,\lambda_l)-\hat{y}_{N,k}(m,\lambda_l)}{\sqrt{y(m,\lambda_l)}}\right)^2 (12)$$

Cette expression peut être exprimée sous forme matricielle :

$$j_{mv,N,k}(\theta_k, \phi_k) = -\frac{1}{2}(y_{N,k} - \hat{y}_{N,k})^T W_k (y_{N,k} - \hat{y}_{N,k}) \quad (13)$$

Avec

$$W_k = diag\left(\frac{1}{y}\right) (14)$$

$W_k$ est une matrice de de taille $ML * ML$ et dont la diagonale comporte la grandeur $\frac{1}{y(m,\lambda_l)}$ .

Les paramètres à déterminer $\theta_k$ et $\phi_k$ sont ceux maximisant la fonction de vraisemblance $j_{mv,N,k}(\theta_k, \phi_k)$. Maximiser la fonction $j_{mv,N,k}(\theta_k, \phi_k)$ revient à minimiser la fonction opposée $-j_{mv,N,k}(\theta_k)$.

$\theta_k$ et $\phi_k$ peuvent être estimés selon :

$$\theta_k, \phi_k = \underset{\theta_k \in \{\Pi, T\}; \phi_k \in \mathbb{R}_+^N}{argmin} -\left(j_{mv,N,k}(\theta_k, \phi_k)\right) (15)$$

$\Pi$ correspond au volume de l'objet examiné, et plus précisément aux positions susceptibles d'être prises par les points irradiants. En l'absence d'a priori, $\Pi$ correspond à l'ensemble du volume examiné.

T correspond à une plage de variation des grandeurs $\tau_{k_{m,n}}$ : elle peut être préalablement définie.

Etape 190 réitération des étapes 140 à 190

Suite à l'obtention de $\theta_k$ et $\phi_k$, les étapes 140 à 180 sont réitérées, jusqu'à l'atteinte d'un critère d'arrêt d'itérations. Ce dernier peut être un nombre $K$ d'itérations prédéterminées ou un écart entre deux valeurs successives de la fonction de vraisemblance $j_{mv,N,k}(\theta_k, \phi_k)$ et $j_{mv,N,k-1}(\theta_{k-1}, \phi_{k-1})$ suffisamment faible pour que l'on puisse considérer que la convergence soit atteinte. Les étapes 140 à 180 de l'itération suivantes sont mises en oeuvre en prenant en compte les vecteurs de paramètres $\theta_k$ et $\phi_k$ résultant de l'étape 180.

Après que le critère d'arrêt des itérations a été atteint, on a : $\theta_N = \theta_K$ et $\phi_N = \phi_K$. K correspond au rang de la dernière itération.

L'expérience montre que la convergence est généralement atteinte en quelques dizaines d'itérations $k$, ou pour un nombre d'itérations $k$ de l'ordre d'une centaine.

Etape 200 : renouvellement des étapes 140 à 190.

De façon avantageuse, les étapes 140 à 190, sont réitérées Q fois, en prenant un même nombre *N* de points irradiants, Q étant un entier typiquement compris entre 10 et 100. Un rang *q* est assigné à chaque itération de ces étapes. Lors de chaque étape 190, on obtient un couple de vecteurs $\theta_{N\,q}$, $\phi_{N\,q}$. A chaque couple de vecteurs $\theta_{N\,q}$, $\phi_{N\,q}$ est associé une valeur de la fonction de coût $j_{mv,N,K}$ $(\theta_{N\,q}, \phi_{N\,q})$ minimale, résultant de la minimisation décrite ci-dessus en lien avec (15).

Etape 210 : sélection d'un couple $\theta_{N\,q}$, $\phi_{N\,q}$

Au cours de cette étape, on sélectionne le couple $\theta_N$, $\phi_N$, parmi les couples $\theta_{N_q}$, $\phi_{N_q}$, permettant d'obtenir la valeur minimale parmi les Q des valeurs $_{jmv,N,K}$ $(\theta_{N\,q}, \phi_{N\,q})$ obtenues lors de chaque renouvellement des étapes 140 à 190.
Les étapes 200 et 210 sont optionnelles. Elles permettent d'obtenir un nombre Q de minimisations. On obtient ainsi un vecteur de paramètres et un vecteur d'intensité permettant de minimiser l'écart entre y et son estimation $\hat{y}_{N,K}$. Cela évite d'obtenir des valeurs $\theta_N$ et $\phi_N$ résultant d'un piège d'optimisation, dans lequel la minimisation permet d'obtenir un minimum secondaire de la fonction de coût.

Etape 220: modification du nombre de points irradiants *N*

Comme précédemment indiqué, les étapes 140 à 190, ainsi que les éventuelles étapes 200 et 210, sont de préférence successivement effectuées pour différentes valeurs de *N*. Par exemple, *N* est progressivement augmenté entre une valeur initiale (par exemple *N* =1) et une valeur finale. Cela permet d'obtenir, pour chaque valeur de *N,* un vecteur de paramètres $\theta_N$ et un vecteur d'intensité (ou vecteur d'activité) $\phi_N$.

Etape 230 : sélection de la valeur la plus probable de *N*

Au cours de cette étape, on calcule un indicateur de validité $AIC_N$ associé à chaque nombre *N* précédemment pris en compte. Le procédé comporte une estimation du nombre de points irradiants le plus probable en fonction des différents indicateurs de validité. Le nombre de points irradiants le plus probable est celui pour lequel l'indicateur de validité est minimal.
L'indicateur de validité peut être le critère d'information d'Akaike (Akaike Information Criteria), tel que :

$$AIC(\hat{y}_{N,k}) = -2\ln(\mathcal{L}_{N,k}(\theta_N, \phi_N | y_{N,k}) + 2\kappa_N \quad (16)$$

Avec $\kappa_N = 4N + NM$
En utilisant (12),

$$AIC(\hat{y}_{N,k}) = cte + j_{mv,N,k}(\theta_N, \phi_N) + 2\kappa_N \quad (17)$$

*cte* est une constante
Le nombre de mesures M étant faible, on utilise de préférence le critère d'information d'information d'Akaike corrigé *AICc,* tel que :

$$AICc(\hat{y}_{N,k}) = AIC(\hat{y}_{N,k}) + 2\frac{\kappa_N(\kappa_N+1)}{ML-\kappa_N-1} \quad (18)$$

Compte tenu de (17), l'expression (18) peut s'écrire

$$AICc(\hat{y}_{N,k}) = cte + j_{mv,N,k}(\theta_N, \phi_N) + 2\kappa_N + 2\frac{\kappa_N(\kappa_N+1)}{ML-\kappa_N-1} \quad (19)$$

Le nombre de points irradiants $\hat{N}$ optimal est celui pour lequel le critère $AICc(\hat{y}_{N,k})$ est minimal. Ainsi,

$$\hat{N} = \underset{N}{\arg\min}(AICc(\hat{y}_{N,k})) \quad (20)$$

Suite à cette étape, le vecteur d'intensité retenu est $\phi_{\hat{N}}$. De même, le vecteur de paramètres retenu est $\theta_{\hat{N}}$.

Selon une possibilité, le critère d'information d'Akaike peut être remplacé par un autre indicateur, par exemple le BIC (Bayesian Information Criteria).

Variantes

L'expression du modèle direct, selon (7), fait intervenir le vecteur de paramètres $\theta_k$ et le vecteur d'intensité $\phi_k$. Le modèle direct est non linéaire vis-à-vis du vecteur de paramètres $\theta_k$ et linéaire vis-à-vis du vecteur d'intensité $\phi_k$. Dans l'étape 180 précédemment décrite, au cours de chaque itération k, on estime conjointement $\theta_k$ et $\phi_k$.

Il peut être avantageux d'estimer, au cours de chaque itération, $\theta_k$ et $\phi_k$ successivement. Pour cela, l'étape 180 est subdivisée en une sous-étape 181 et une sous-étape 182. Cf. figure 3B. Au cours de la sous-étape 181, on peut mettre en oeuvre une méthode de type descente de gradient, par exemple la méthode de Broyden-Fletcher-Goldfarb-Shanno. Cela revient à calculer le gradient du maximum de vraisemblance par rapport au vecteur de paramètres $\theta_k$.

$$\frac{\partial j_{mv,N,k}(\theta_k,\phi_{k-1})}{\partial \theta_k} = (G_k \odot H_k \odot A_k)\phi_{k-1} - y_{N,k})^T W_k \frac{\partial (G_k \odot H_k \odot A_k)\phi_{k-1}}{\partial \theta_k} \ (21)$$

$W_k$ a été défini dans (14).

Cela permet une mise à jour, au cours de l'itération $k$, du vecteur $\theta_k$. Pour la mise en oeuvre de l'expression précédente, on utilise $\phi_{k-1}$, résultant de l'itération précédente.

Au cours de la sous-étape 182, le modèle direct, explicité dans (7), est résolu par une méthode de type moindres carrés pour maximiser la fonction de vraisemblance (ou minimiser l'opposée de la fonction de vraisemblance), selon (13) :

$$j_{mv,N,k}(\theta_k, \phi_k) = -\frac{1}{2}(y_{N,k} - \hat{y}_{N,k})^T W_k (y_{N,k} - \hat{y}_{N,k}) \ (22)$$

et

$$\phi_{k,N} = \underset{\phi_{k,N}}{\text{argmin}} \left( j_{mv,N,k}(\theta_k, \phi_k) \right) (23)$$

La minimisation est effectuée en prenant en compte le vecteur $\theta_k$ résultant de la sous-étape 181.

L'avantage de l'estimation séparée de $\theta_k$ et de $\phi_k$ est que cela réduit l'espace de recherche, ce qui génère moins de pièges d'optimisation. Cela permet également de séparer la grandeur $\phi_k$ dont les valeurs varient selon une plage beaucoup plus étendues que celles du vecteur de paramètres formant $\theta_k$.

Utilisation d'un a-priori / Initialisation

De préférence, lors de chaque première itération des étapes 150 à 180, il est préférable de disposer de valeurs initiales de certains paramètres, voire sur certaines valeurs d'activité. A défaut, les valeurs des paramètres sont tirées selon une loi uniforme. Cela constitue l'étape 240.

Les a priori peuvent résulter de la connaissance de l'historique d'exploitation, ou d'examens mettant en oeuvre d'autres modalités.

Selon une possibilité, lors de l'étape 240, on met en oeuvre, avant chaque première itération des étapes 150 à 180, une initialisation. L'initialisation est mise en oeuvre soit à chaque nouvelle valeur de $N$. L'initialisation est décrite en lien avec les étapes 241 à 249 sur la figure 3C.

Au cours de l'étape 241, on forme, pour chaque mesure m, un vecteur de flux $\Phi_m^*$ tel que :

$$\Phi_m^* = \frac{y_m}{h_{det}} \ (25)$$

$h_{det}$ correspond à une moyenne des vecteurs d'efficacité (dimension L), en considérant, en chaque énergie, une valeur moyenne des extremums de l'efficacité en fonction de l'angle d'incidence. Chaque terme $\Phi_m^*$ correspond à une estimation, en première approche, d'une activité surfacique équivalente dans l'objet lors de la mesure m (photons émis par unité de surface).

Etape 242 : Il s'agit d'établir la variation de $\Phi_m^*$ en fonction l'énergie, à partir d'une relation simple, de façon à estimer la valeur de $\Phi_m^*$ en l'absence d'écran dans l'objet. A partir de chaque terme $\Phi_m^*$, on définit deux coefficients $\beta_{1,m}$ et $\beta_{2,m}$, tels que

$$\Phi_m^*(\lambda_l) = \beta_{1,m} + \frac{\beta_{2,m}}{\lambda_l} \quad (26)$$

$\beta_{1,m}$ est un réel positif et $\beta_{2,m}$ est un réel négatif.

$\beta_{1,m}$, correspond à la valeur de $\Phi_m^*$ lorsque l'énergie tend vers l'infini. Cela peut s'apparenter, en première approche, à une activité surfacique équivalente, en négligeant l'atténuation dans l'objet examiné.

$\beta_{2,m}$, décrit l'évolution de $\Phi_m^*$ en fonction de l'énergie. Ce coefficient représente la capacité de la matière formant un écran, dans l'objet étudié, à atténuer le rayonnement détecté lors de la mesure m. Ainsi, $\beta_{2,m}$ correspond à une atténuation affectant la mesure m.

Si l'on pose :

$$R' = \begin{bmatrix} 1 & \frac{1}{\lambda_1} \\ \vdots & \vdots \\ 1 & \frac{1}{\lambda_L} \end{bmatrix} \quad (27)$$

Et le vecteur

$$\beta_m = \left(\beta_{1,m}; \beta_{2,m}\right) \quad (28)$$

On peut estimer $\widehat{\beta_m}$ selon l'expression :

$$\widehat{\beta_m} = (R'^T R')^{-1} W R'^T \ln(\Phi_m^*) \quad (29)$$

Avec

$$\widehat{\beta_m} = \left(\widehat{\beta_{1,m}}, \widehat{\beta_{2,m}}\right) \quad (30),$$

et *W,* une matrice de de taille *ML \* ML* et dont la diagonale comporte la grandeur $\dfrac{\overline{h_{det}}(\lambda_l)}{y(m,\lambda_l)}$ Cette étape suppose que l'isotope sélectionné ait plusieurs énergie d'émission exploitables.

Etape 243 : estimation d'une activité équivalente de l'objet correspondant à chaque mesure.

A partir de $\widehat{\beta_{1,m}}$ on établit un vecteur d'observation corrigé, pour la mesure m, dont chaque terme est :

$$y_m^{cor} = \Phi_m^{cor} \, \overline{h_{det}} \quad (31)$$

Avec

$$\Phi_m^{cor} = e^{\widehat{\beta_{1,m}^*}} \quad (32)$$

$\Phi_m^{cor}$ peut être considéré comme représentatif d'une activité surfacique équivalente dans l'objet, à la position de mesure m, en prenant l'hypothèse d'une activité surfacique homogène, et en l'absence d'écran dans l'objet, ce qui correspond à une énergie d'émission infinie.

Etape 244 : formation d'un vecteur d'observation corrigé pour chaque mesure m. $y_m^{cor}$ correspond à un vecteur d'observation corrigé pour la mesure m. Il s'agit d'une estimation d'un vecteur d'observation qui correspondrait à un objet dont l'activité serait $\Phi_m^{cor}$. $y_m^{cor}$ peut être considéré, en première approche, comme représentatif d'un spectre qui serait mesuré, en la position m, correspondant à l'activité équivalente $\Phi_m^{cor}$.

Etape 245 : formation d'un vecteur d'observation corrigé pour l'ensemble des mesures.

La dimension de $y_m^{cor}$ est L, qui correspond au nombre d'énergies d'émission considérées. A partir de chaque vecteur $y_m^{cor}$, on peut former un vecteur d'observation corrigé, de façon analogue à (2), tel que :

$$y^{cor} = \begin{bmatrix} y_1^{cor}(\lambda_1) \\ y_1^{cor}(\lambda_L) \\ y_M^{cor}(\lambda_1) \\ y_M^{cor}(\lambda_L) \end{bmatrix} (33).$$

La dimension de $y^{cor}$ est $ML$

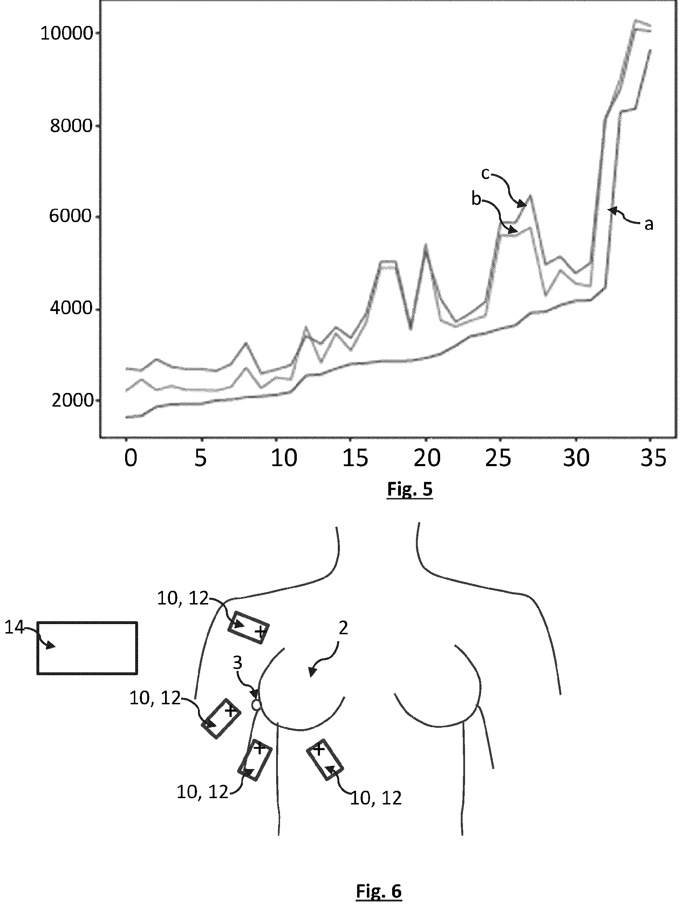

Sur la figure 5, on a représenté, pour différentes mesures (axe des abscisses) simulées :

- courbe a : vecteur y résultant des observations, à l'énergie 129.3 keV ;
- courbe b : vecteur y corrigé, ce vecteur corrigé étant obtenu par modélisation, en supprimant les écrans dans un objet ;
- courbe c : vecteur $y^{cor}$ obtenu en mettant en oeuvre les étapes 241 à 245 à partir du vecteur représenté sur la courbe a, toujours à l'énergie 129.3 keV. Pour obtenir cette courbe, on a pris en compte une scène de mesure simulée comportant trois points irradiants formés de $^{239}$Pu, respectivement positionnés dans une enceinte d'épaisseur 0.5 cm, formée d'un matériau composé de 30% (fraction massique) de Pb et 70% de Si. Les trois points irradiants étaient disposés :

  • le premier, au centre d'une sphère creuse d'acier de rayon 0.5 cm ;
  • le deuxième, derrière une plaque d'acier d'épaisseur 0.5 cm ;
  • le troisième, sans écran.

La courbe b) a été obtenue par simulation, en supprimant les écrans. Elle correspond à la « vérité terrain ». On observe que la courbe c) constitue une bonne approximation., car elle est suffisamment proche de la courbe b).

De façon logique, les valeurs formant les courbes b) et c) sont supérieures à celles formant la courbe a). Cela est dû au fait que la courbe a) résulte de mesures prenant en compte l'atténuation réelle dans l'objet examiné.

Etape 246 : formation d'un modèle permettant d'estimer le vecteur d'observation corrigé. Il s'agit d'une estimation itérative, analogue aux itérations décrites en lien avec les étapes 150 à 190. Chaque itération correspond à un indice d'itération $k$.

$y^{cor}$ est un vecteur de dimension $ML$, de même que $y$. A partir de $y^{cor}$, on peut écrire :

$$\hat{y}_{N,k}^{cor} = \left[ G_k^0 \odot H_k^0 \right] \phi_k^0 \ (34)$$

L'objectif de l'initialisation est d'établir un vecteur de paramètres initiaux $\theta_k^0$, conditionnant les matrices $G_k$ et $H_k$ lors de chaque itération $k$, ainsi qu'un vecteur $\phi_k^0$. Les matrices $G_k^0$ et $H_k^0$ correspondent respectivement aux matrices $G_k$ et $H_k$ paramétrées par $\theta_k^0$. $\phi_k^0$ est une estimation d'une activité des $N$ points irradiants considérés.

Etape 247 : optimisation par maximum de vraisemblance

Cette étape est analogue à l'étape 180 précédemment décrite. En reprenant l'expression (13), on établit une fonction de vraisemblance initiale :

$$j_{mv,N,k}\left(\theta_k^0, \phi_k^0\right) = -\frac{1}{2}(y^{cor} - \hat{y}_{N,k})^T W_k^0 \,(y^{cor} - \hat{y}_{N,k}) \quad (35)$$

Avec $\quad W_k^0 = diag(\frac{1}{y^{cor}})$

Puis, de façon analogue à (23)

$$\theta_k^0, \phi_k^0 = \underset{\theta_k, \phi_k}{\mathrm{argmin}} \left( j_{mv,N,k}\left(\theta_k^0, \phi_k^0\right) \right) \quad (36)$$

L'expression (36) est résolue au fur et à mesure des itérations *k*.

Etape 248 : il s'agit de lancer une nouvelle itération tant que le critère d'arrêt des itérations n'a pas été atteint (cf. étape 190).

Etape 249 : cette étape est optionnelle. Comme décrit en lien avec les étapes 200 et 210, les étapes 246 à 248 peuvent être réitérées Qfois, chaque itération étant indicée par l'indice q. Au cours de chaque réitération, on obtient un couple de valeurs $\left(\theta_k^0, \phi_k^0\right)_q$. Après les Q itérations, on sélectionne le couple de valeurs pour lequel la vraisemblance est maximale.

Suite à l'initialisation, les vecteurs $\theta_k^0, \phi_k^0$ sont utilisés pour initialiser la résolution décrite en lien avec l'étape 180, lorsque l'indice d'itération k est égal à 1.

Estimation de la dose

Selon une possibilité, après l'étape 230, on peut estimer une dose en différents points, générée par les $\hat{N}$ points irradiants identifiés, et du vecteur de paramètres $\theta_{\hat{N}}$. Les principales étapes de cette variante sont représentées sur la figure 3D.

Etape 250 : constitution de matrices

On peut former 4 matrices *G*, *A* et *D*, $\Lambda$ de dimension $ML \times \hat{N}$ en utilisant $\hat{N}$ ainsi que les paramètres $\theta_{\hat{N}}$ résultant de l'étape 230.

La matrice G est une matrice de distances similaire à la matrice $G_k$ décrite dans l'étape 150, en lien avec (3).

$$G = \begin{bmatrix} \frac{1}{\|p_1-\pi_1\|^2} & \cdots & \frac{1}{\|p_1-\pi_{\hat{N}}\|^2} \\ \vdots & & \vdots \\ \frac{1}{\|p_M-\pi_1\|^2} & & \frac{1}{\|p_M-\pi_{\hat{N}}\|^2} \\ \vdots & \ddots & \vdots \\ \frac{1}{\|p_1-\pi_1\|^2} & \cdots & \frac{1}{\|p_1-\pi_{\hat{N}}\|^2} \\ \vdots & & \vdots \\ \frac{1}{\|p_M-\pi_1\|^2} & & \frac{1}{\|p_M-\pi_{\hat{N}}\|^2} \end{bmatrix} \quad (40)$$

On constitue une matrice d'atténuation, de façon similaire à la matrice d'atténuation $A_k$ décrite dans l'étape 150, en lien avec (5).

$$A = \begin{bmatrix} e^{-\frac{\tau_{1,1}}{\lambda_1}} & & e^{-\frac{\tau_{1,\hat{N}}}{\lambda_1}} \\ \vdots & \cdots & \vdots \\ e^{-\frac{\tau_{M,1}}{\lambda_1}} & & e^{-\frac{\tau_{M,\hat{N}}}{\lambda_1}} \\ \vdots & \ddots & \vdots \\ e^{-\frac{\tau_{1,1}}{\lambda_L}} & & e^{-\frac{\tau_{1,\hat{N}}}{\lambda_L}} \\ \vdots & \cdots & \vdots \\ e^{-\frac{\tau_{M,1}}{\lambda_L}} & & e^{-\frac{\tau_{M,\hat{N}}}{\lambda_L}} \end{bmatrix} \quad (41)$$

On établit une matrice $D$ de coefficients d'absorption

$$D = \begin{bmatrix} d(\lambda_1) & & d(\lambda_1) \\ \vdots & \cdots & \vdots \\ d(\lambda_1) & & d(\lambda_1) \\ \vdots & \ddots & \vdots \\ d(\lambda_L) & & d(\lambda_L) \\ \vdots & \cdots & \vdots \\ d(\lambda_L) & & d(\lambda_L) \end{bmatrix} \quad (42)$$

Chaque terme $d(\lambda_l)$ correspond à un coefficient d'absorption massique (i-e par unité de masse) à l'énergie $\lambda_l$.

On établit également une matrice d'énergie $\Lambda$, de dimension $ML \times \hat{N}$ :

$$\Lambda = \begin{bmatrix} \lambda_1 & & \lambda_1 \\ \vdots & \cdots & \vdots \\ \lambda_1 & & \lambda_1 \\ \vdots & \ddots & \vdots \\ \lambda_L & & \lambda_L \\ \vdots & \cdots & \vdots \\ \lambda_L & & \lambda_L \end{bmatrix} \quad (43)$$

A partir des matrices $G$, $H$, $A$ et $\Lambda$, on établit une matrice de réponse dosimétrique $R'$, de dimension $ML \times \hat{N}$

$$R' = G \odot H \odot A \odot \Lambda \quad (44)$$

Etape 260 : estimation d'un débit de dose en au moins un point de mesure

On calcule ensuite un vecteur $DR$, de dimension $M$, dont chaque terme $DR(m)$ est une estimation du débit de dose au point de mesure $m$.

$$DR = \frac{1}{4\pi} R' \phi \quad (45)$$

L'expression (45) permet d'estimer un débit de dose en profondeur, selon l'hypothèse d'équilibre électronique, le débit de dose étant égal au débit de kerma. L'estimation est correcte lorsque la contribution photons diffusés est négligeable par rapport à la contribution des photons non diffusés.

Le débit de dose entre des points de mesure m peut ensuite être estimé par interpolation, de façon à estimer un débit de dose en des points différents des points de mesure.

La matrice de réponse dosimétrique R' peut être établie en prenant en compte une partie seulement des points de mesure, voire un seul point de mesure.

Mode de réalisation non spectrométrique

Dans le mode de réalisation précédemment décrit, le détecteur a une fonction spectrométrique. Les données d'entrée de l'algorithme décrit en lien avec la figure 3A sont des spectres mesurés $S_m$ en différentes mesures m, chaque mesure m correspondant à une position et une orientation du détecteur. Un tel mode de réalisation est adapté lorsque les points irradiants sont formés de plusieurs isotopes. Cela correspond notamment à des applications de la méthode dans des installations nucléaires, sur des déchets ou des équipements de procédé, ou encore des structures de type génie civil.

Les algorithmes décrits en lien avec les figures 3A à 3D peuvent être appliqués à une modalité de mesure en taux de comptage, selon laquelle, en chaque mesure, la grandeur mesurée $CR_m$ (count rate, ou taux de comptage) est un nombre d'impulsions par seconde résultant du circuit de mesure 12.

Le détecteur 10 et le circuit de mesure 12 peuvent être plus simples que dans le mode de réalisation spectrométrique. Ainsi, le détecteur 10 peut être un détecteur solide ou gazeux, relié à un circuit de mesure permettant une détermination du nombre d'impulsions détectées par unité de temps. Selon une possibilité, le circuit de mesure détermine le taux de comptage dans une plage d'amplitude particulière, ce qui revient à n'adresser qu'une seule bande spectrale.

On comprend que selon ce mode de réalisation, $L = 1$ et $J = 1$ il n'y a qu'une seule bande spectrale, qui correspond à la plage d'amplitude des impulsions dans laquelle le circuit de mesure détermine le taux de comptage. Il n'y a qu'un seul isotope, ou un seul mélange d'isotopes pour chaque point irradiant.

Les applications de cette méthode peuvent concerner le nucléaire, lorsque le spectre d'émission est simple, et/ou dominé par un seul radioélément, sans prise en compte de l'atténuation. Cela peut également concerner le médical, un exemple d'application étant une recherche de points irradiants dans un corps ayant préalablement fait l'objet d'une injection d'un isotope radioactif. Une application peut être une recherche de ganglions sentinelles lorsque l'isotope radioactif est configuré pour se fixer sur des cellules cancéreuses. Dans une telle application, il n'y a qu'une seule énergie d'émission et l'atténuation du rayonnement émis peut être négligée. L'utilisateur utilise un détecteur compact, pouvant aisément être manipulé à la main. Le détecteur peut être couplé à une unité de positionnement, permettant de déterminer les positions respectives du détecteur en chaque point de mesure. La figure 6 représente une application de recherche de zones irradiantes 3, en l'occurrence des ganglions sentinelles, en disposant un ensemble portable, formé par le détecteur 10 et le circuit de mesure 12, en différents points de mesure autour d'un corps 2 d'une personne.

Les étapes décrites en lien avec la figure 3A sont suivies. Selon ce mode de réalisation, l'étape 115 n'est pas mise en oeuvre. Au cours de l'étape 120, le vecteur d'observation $y_m$ correspond au taux de comptage $CR_m$ associé à la mesure m. On peut éventuellement prendre en compte un taux d'embranchement $i_L$.

Ainsi, au cours de l'étape 120,

$$y_m = CR_m \ \ (50)$$

) ou

$$y_m = \frac{CR_m}{i_L} \ (50')$$

La prise en compte du facteur d'embranchement est préférable si l'on souhaite obtenir une quantification de chaque point irradiant. Elle est optionnelle si l'objectif principal est de localiser le point irradiant, la quantification de l'activité n'étant qu'indicative.

On forme un vecteur d'observation y de dimension M.

$$y = \begin{bmatrix} y_1 \\ \vdots \\ y_M \end{bmatrix} (52)$$

Les étapes 130, 140 et 150 sont mises en oeuvre. Au cours de l'étape 150, on définit les matrices $G_k$ et $H_k$ de dimensions $(M,N)$ telles que

$$G_k = \begin{bmatrix} \dfrac{1}{\|p_1 - \pi_{1,k}\|^2} & & \dfrac{1}{\|p_1 - \pi_{N,k}\|^2} \\ \vdots & \cdots & \vdots \\ \dfrac{1}{\|p_M - \pi_{1,k}\|^2} & & \dfrac{1}{\|p_M - \pi_{N,k}\|^2} \end{bmatrix} \quad (53)$$

et

$$H_k = \begin{bmatrix} h(\varphi_{k_{1,1}}) & & h(\varphi_{k_{1,N}}) \\ \vdots & \cdots & \vdots \\ h(\varphi_{k_{M,1}}) & & h(\varphi_{k_{M,N}}) \end{bmatrix} \quad (54)$$

La matrice $A_k$ n'est pas utilisée.

La réponse du détecteur peut être supposée isotrope, auquel cas $h(\varphi_{k_{1,n}})$ a la même valeur
Les étapes 160, 170, 180 et 190 sont mises en oeuvre avec L = 1, de même que les étapes 200 à 230. Au cours de ces étapes $y(m, \lambda_l) = y(m)$ et $\hat{y}_{N,k}(m; \lambda_l) = \hat{y}_{N,k}(m)$
Les variantes illustrées sur les figures 3B à 3D peuvent être mises en oeuvre avec ce mode de réalisation. L'estimation du débit de dose est réalisée en prenant en compte l'énergie d'émission de l'isotope radioactif considéré. Dans les applications médicales, cela permet une estimation du débit de dose en chaque position de mesure. Le dispositif permet à la fois de localiser des points irradiants, tout en fournissant des données quantitatives de radioprotection. En estimant la durée des mesures en chaque point d'observation, il est possible d'estimer la dose intégrée lors d'une intervention. Ainsi, de façon avantageuse, lorsque le détecteur est porté manuellement, le dispositif comporte un chronomètre permettant une estimation d'une durée de chaque mesure.

Essais expérimentaux

On a mis en oeuvre la méthode de mesure en utilisant un détecteur Germanium hyper pur (Ge HP broad energy 3830) : surface 38 mm$^2$ et d'épaisseur 30 mm. Le détecteur a été positionné en différentes positions autour d'une boite à gants. On a pris en compte l'isotope $^{239}$Pu.

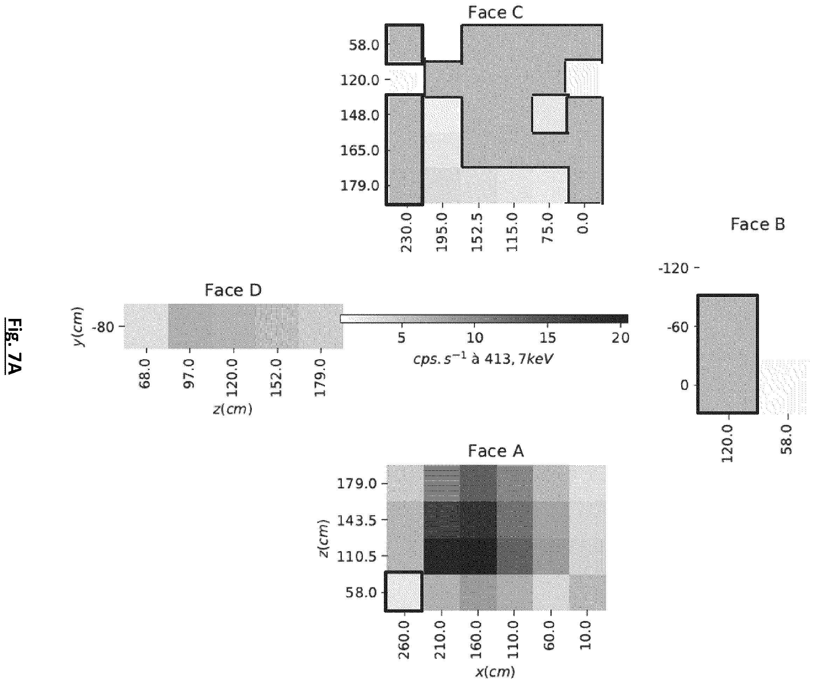

La figure 7A montre une cartographie de flux de photons (impulsions détectées par secondes, ou coups par seconde) mesurés à 413 keV. Il s'agit de valeurs du spectre mesuré $S_m$ en différentes mesures m, divisées par le temps de comptage. Le niveau de gris code le nombre de photons détectés par seconde à cette énergie. Les zones encadrées sont des zones non accessibles avec le détecteur. Il s'agit d'ailleurs d'un avantage de l'invention : elle permet d'effectuer une cartographie d'un objet dans un environnement encombré, en manipulant un détecteur compact en différentes positions autour de l'objet. Sur la figure 7A, on a représenté la cartographie effectuée le long de 4 faces de la boite à gants : face A, face B, face C et face D.

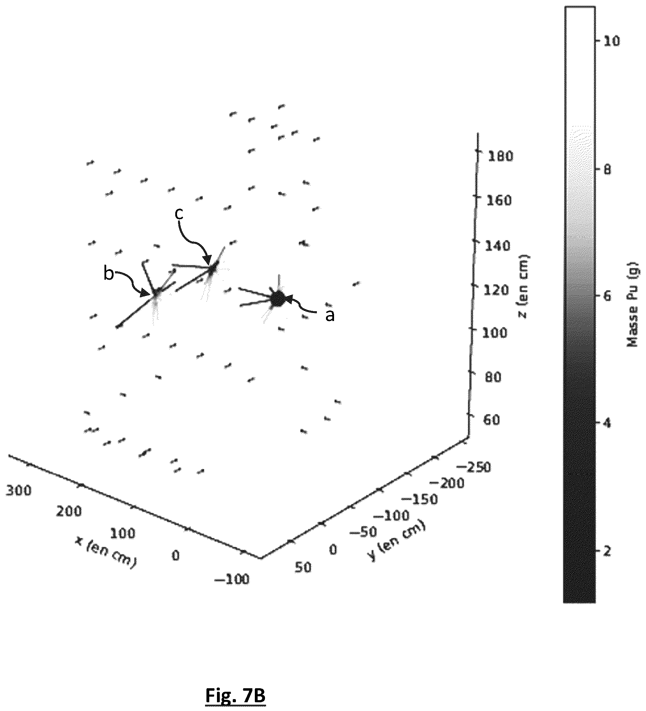

La figure 7B représente une estimation de la localisation et de la masse de matière (Pu) de points irradiants en mettant en oeuvre le procédé tel que précédemment décrit. La boite à gants examinée comportait un atelier d'usinage, comportant un marbre supportant un tour. La mise en oeuvre de l'invention a permis de localiser trois points chauds. Les trois points chauds étaient situés au niveau du marbre, le plus intense (point b sur la figure 7B) se trouvant à l'aplomb de la zone de coupe du tour. Un deuxième point irradiant (point c sur la figure 7B) se trouvait au niveau d'une zone comportant un porte-outil. Enfin, un troisième point irradiant (point a sur la figure 7B) se trouvait entre la paroi de la boite à gants et le bâti du tour.

La somme des activités des points irradiants détectés était cohérente avec une activité totale donnée par une autre méthode de mesure de rétention.

Cet essai atteste de la pertinence de la méthode. Elle permet, moyennant le déploiement d'un détecteur simple et peu onéreux, et dans des conditions de terrain, d'estimer la quantité et la répartition de l'activité dans un objet.

Dans les exemples qui précèdent, on a décrit le recours à un détecteur présentant un simple blindage. L'invention peut s'appliquer à un détecteur collimaté, le seul impact étant une modification de la matrice H.

L'invention peut s'appliquer au contrôle de tout autre objet : équipement ou structure d'une installation nucléaire, y compris génie civil, localisation de radioactivité dans l'environnement, ou localisation et quantification de points irradiants in-vivo, l'objet étant une partie d'un corps humain ou animal.

Dans les exemples qui précèdent, on a décrit le recours à un détecteur non pixelisé. L'invention peut également s'appliquer à des détecteurs pixelisés, dont chaque pixel forme un détecteur élémentaire. Cela permet de démultiplier le nombre de points de mesure. En chaque position de détecteurs, on obtient autant de mesures que de pixels.

L'invention, au prix d'une résolution spatiale certes moins bonne que l'imagerie gamma, permet d'obtenir un résultat exploitable de localisation de points irradiants, et la quantification de leurs activités respectives dans un objet avec un nombre de points de mesure bien plus restreint, et avec un équipement peu coûteux et simple à mettre en oeuvre. Un aspect important est qu'elle ne nécessite de plus pas d'hypothèse quant à l'atténuation de l'objet : lorsque la matrice d'atténuation est utilisée, l'atténuation des points irradiants est estimée conjointement à la position et à l'intensité des points irradiants, dans le vecteur de paramètres.

## Revendications

1. Procédé de localisation de points irradiants dans un objet, chaque point irradiant émettant des photons gamma à au moins une énergie d'émission, le procédé mettant en oeuvre un dispositif de mesure, le dispositif de mesure comportant :

   - un détecteur (10), configuré pour détecter les photons gamma, et pour former, à chaque détection, une impulsion;
   - un circuit de mesure (12), configuré pour déterminer un nombre d'impulsions détectées;

   le procédé comportant les étapes suivantes :

   a) acquisition de mesures ($S_m$) face à l'objet, à chaque mesure correspondant une position de mesure ($p_m$) et une orientation du détecteur ($\varphi_m$), les mesures étant acquises en disposant le détecteur (10) en différentes positions de mesure ($p_m$) et/ou différentes orientations ($a_m$) ;
   b) traitement des mesures, par le circuit de mesure, de façon à extraire des taux de comptage;
   c) formation d'un vecteur d'observation (y) à partir des taux de comptage extraits lors de l'étape b);
   d) sélection d'un nombre de points irradiants (N) dans l'objet ;
   e) initialisation d'un vecteur de paramètres ($\theta_0$), comportant une position ($\pi_n$) d'au moins un point irradiant situé dans l'objet ;
   f) à partir du vecteur de paramètres initialisé ($\theta_0$) résultant de e), ou du vecteur de paramètre ($\theta_{k-1}$) résultant d'une itération précédente, actualisation d'un modèle matriciel direct, reliant une estimation du vecteur d'observation ($\ddot{y}$) à un vecteur d'intensités ($\phi_k$), le vecteur d'intensités comportant une estimation de l'intensité de chaque point irradiant ;
   g) inversion du modèle direct, par un algorithme d'optimisation, de façon à mettre à jour le vecteur de paramètres ($\theta_k$) et le vecteur d'intensités ($\phi_k$);
   h) réitération des étapes f) et g) jusqu'à l'atteinte d'un critère d'arrêt d'itération, de façon à obtenir, suite à la dernière itération, une estimation du vecteur de paramètres et du vecteur d'intensités correspondant au nombre de points irradiants sélectionnés.

2. Procédé selon la revendication 1, dans lequel :

   - le circuit de mesure (12) est un circuit de mesure spectrométrique, configuré pour former un spectre, le spectre correspondant à un nombre de photons détectés dans différents canaux, à chaque canal correspondant une énergie du photon détecté ;
   - le circuit de mesure comporte une unité spectrométrie (13), configurée pour identifier au moins un pic d'émission sur le spectre formé par le circuit de mesure spectrométrique, chaque pic d'émission s'étendant autour d'une énergie d'émission;

   le procédé étant tel que ;

   - dans l'étape a), chaque mesure est un spectre ($S_m$) ;
   - l'étape b) comporte un traitement de spectres, par l'unité de spectrométrie (13), de façon à extraire des taux de comptage de chaque pic d'émission.

3. Procédé selon la revendication 1 ou la revendication 2, dans lequel lors de l'étape g), l'inversion comporte une minimisation d'une fonction de coût ($j_{mv,N}(\theta_k, \phi_k)$, la fonction de coût quantifiant un écart entre

   - l'estimation du vecteur d'observation obtenue lors de l'étape f) ;
   - le vecteur d'observation formé dans l'étape c).

4. Procédé selon la revendication 3, dans lequel l'étape g) est effectuée par un algorithme de maximum de vraisemblance.

5. Procédé selon l'une quelconque des revendications précédentes, dans lequel :

- les étapes d) à h) sont réitérées en prenant en compte, lors de chaque itération des étapes d) à h), des nombres différents de points irradiants ($N$) ;
- le procédé comporte une détermination d'un indicateur de validité ($AIC$) associé à chaque itération des étapes d) à h), l'indicateur de validité étant associé au nombre de points irradiants sélectionné lors de chaque itération ;
- le procédé comporte une estimation du nombre de points irradiants le plus probable en fonction des différents indicateurs de validité respectivement associés à différents nombre de points irradiants.

6. Procédé selon l'une quelconque des revendications précédentes, dans lequel le modèle direct comporte une matrice de réponse ($R_k$), formée d'un produit de Hadamard entre au moins :

- une matrice de distances ($G_k$), traduisant les distances respectives entre chaque position de mesure et la position de chaque point irradiant, dont chaque terme comporte le carré de la distance entre une position de mesure et une position d'un point irradiant, la position de chaque point irradiant formant un paramètre du modèle direct ;
- une matrice d'efficacité ($H_k$), traduisant l'efficacité du détecteur, dont chaque terme correspond à une efficacité de détection du détecteur pour une position et une orientation du détecteur et pour une position d'un point irradiant à au moins une énergie d'émission.

7. Procédé selon la revendication 6, dans lequel la matrice de réponse ($R_k$) est formée d'un produit de Hadamard entre la matrice de distances ($G_k$), la matrice d'efficacité ($H_k$) et une matrice d'atténuation ($A_k$), la matrice d'atténuation traduisant une atténuation des photons émis par chaque point irradiant dans l'objet, chaque terme de la matrice d'atténuation comportant un facteur d'atténuation, à une énergie d'émission, entre une position d'un point irradiant et une position du détecteur, chaque facteur d'atténuation formant un paramètre du modèle direct.

8. Procédé selon la revendication 7, dans lequel l'étape e) comporte :

- e1) à partir du vecteur d'observation résultant de c), calcul d'un vecteur d'observation en l'absence d'atténuation dans l'objet ;
- e2) estimation du vecteur d'observation en l'absence d'atténuation dans l'objet en utilisant un modèle direct comportant la matrice de distances et la matrice d'efficacité ;
- e3) inversion du modèle direct, de façon à estimer un vecteur de paramètres initialisé et un vecteur d'intensité initial, compte tenu du nombre de points irradiants pris en compte dans l'étape d).

9. Procédé selon l'une quelconque des revendications précédentes et de la revendication 3, dans lequel :

- pour un même nombre de points irradiants sélectionnés dans l'objet, les étapes e) à h) sont réitérées ;
- le procédé comporte une comparaison des fonctions de coûts résultant de chaque étape g) de chaque itération des étapes e) à h), le vecteur de paramètres et le vecteur d'intensités, pour le nombre de points irradiants sélectionnés, étant ceux correspondant à la fonction de coût minimale.

10. Procédé selon l'une quelconque des revendications précédentes, dans lequel l'étape g) comporte :

- g1) application d'un algorithme de descente de gradient, pour estimer le vecteur de paramètres, en se basant sur le vecteur d'intensité initial ou résultant d'une itération précédente,
- g2) application d'un algorithme d'inversion, pour estimer le vecteur d'intensité, en utilisant le vecteur de paramètres résultant de g1).

11. Procédé selon la revendication 10, dans lequel, pour un même nombre de points irradiants sélectionnés, le procédé comporte :

- une première série d'itérations des étapes e) à h), en utilisant un modèle direct dans lequel la matrice de réponse est constituée par un produit de Hadamard de la matrice de distances et de la matrice de sensibilité du détecteur ;
- une deuxième série d'itérations des étapes e) à h), en utilisant un modèle direct dans lequel la matrice de réponse est formée par un produit de Hadamard de la matrice de distances, de la matrice de sensibilité du

EP 4 564 062 A1

détecteur et de la matrice d'atténuation ;
- la position et l'activité des points irradiants résultant de la première série d'itérations est utilisée pour initialiser l'inversion du modèle direct dans la première itération de la deuxième série d'itérations.

12. Procédé selon l'une quelconque des revendications précédentes, dans lequel l'étape b) comporte une sélection d'au moins une énergie d'émission d'un isotope prédéterminé, de façon à extraire les taux de comptage dans chaque énergie d'émission sélectionnée.

13. Procédé selon l'une quelconque des revendications précédentes comportant, suite à l'étape h), une estimation d'un débit de dose en au moins un point de mesure, à partir du vecteur d'intensités et du vecteur de paramètres résultant de ladite étape h).

14. Procédé selon la revendication 13 et de la revendication 6 comportant

- mise à jour de la matrice de distances et de la matrice d'efficacité, en fonction du vecteur de paramètres résultant de l'étape h) ;
- prise en compte de coefficients d'absorption massique à au moins une énergie d'émission ;
- estimation du débit de dose en chaque point de mesure à partir de la matrice de distances, de la matrice d'efficacité et des coefficients d'absorption.

15. Dispositif configuré pour estimer une position de points irradiants dans un objet, le dispositif comportant :

- un détecteur (10), configuré pour détecter les photons gamma, et pour former, à chaque détection, une impulsion, le détecteur étant mobile autour de l'objet, de façon à pouvoir être disposé en plusieurs positions et/ou selon différentes orientations par rapport à l'objet ;
- un circuit de mesure (12), configuré pour configuré pour déterminer un nombre d'impulsions détectées par le détecteur;
- une unité de traitement (14), programmée pour mettre en oeuvre les étapes c) à h) d'un procédé selon l'une quelconque des revendications précédentes, à partir du nombre d'impulsions détectées par le circuit de mesure.

16. Dispositif selon la revendication 15, dans lequel :

- le circuit de mesure est un circuit de mesure spectrométrique (12), configuré pour former un spectre, le spectre correspondant à un nombre de photons détectés dans différents canaux, à chaque canal correspondant une énergie du photon détecté ;
- le circuit de mesure comporte une unité spectrométrie (13), configurée pour identifier des pics d'émission sur le spectre formé par le circuit de mesure spectrométrique.

17. Support, pouvant être connecté à un ordinateur, comportant des instructions pour mettre en oeuvre l'étape c) et les étapes e) à h) d'un procédé selon l'une quelconque des revendications 1 à 14 à partir de taux de comptage résultant de mesures réalisées à l'aide d'un détecteur de photons gamma autour d'un objet.

**Fig. 1A**

**Fig. 1B**

**Fig. 2A**

**Fig. 2B**

**Fig. 2C**

**Fig. 2D**

**Fig. 3A**

**Fig. 3B**

**Fig. 3C**

**Fig. 3D**

**Fig. 4**

**Fig. 5**

**Fig. 6**

**Fig. 7A**

**Fig. 7B**

Europäisches
Patentamt

European
Patent Office

Office européen
des brevets

# RAPPORT DE RECHERCHE EUROPEENNE

Numéro de la demande

EP 24 21 5938

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 116 858 214 A (INST RADIATION MEDICINE CHINESE ACADEMY MEDICAL SCIENCES ET AL.) 10 octobre 2023 (2023-10-10) * alinéas [0020] - [0051] * * figures 1,3 * ----- | 1-17 | INV. G01T1/164 G01T1/169 G01T1/167 |
| A | WO 2012/010959 A2 (OSVATH SZABOLCS [HU]; SZIGETI KRISZTIAN [HU]) 26 janvier 2012 (2012-01-26) * page 12, ligne 30 - page 13, ligne 18 * * page 15, ligne 17 - page 17, ligne 32 * * figures 1,2 * ----- | 1-17 | |
| A | US 5 818 050 A (DILMANIAN F AVRAHAM [US] ET AL) 6 octobre 1998 (1998-10-06) * colonne 5, lignes 1-17 * * colonne 6, ligne 28 - colonne 7, ligne 23 * * figures 1,2 * ----- | 1-17 | |

**DOMAINES TECHNIQUES RECHERCHES (IPC)**

G01T

Le présent rapport a été établi pour toutes les revendications

| Lieu de la recherche | Date d'achèvement de la recherche | Examinateur |
|---|---|---|
| La Haye | 5 mars 2025 | Wulveryck, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 5938

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-03-2025

| Document brevet cité au rapport de recherche | | Date de publication | Membre(s) de la famille de brevet(s) | Date de publication |
|---|---|---|---|---|
| CN 116858214 | A | 10-10-2023 | AUCUN | |
| WO 2012010959 | A2 | 26-01-2012 | AUCUN | |
| US 5818050 | A | 06-10-1998 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

**Documents brevets cités dans la description**

- WO 2023126509 A

- WO 2023126508 A